(19) Europäisches Patentamt

European Patent Office

Office européen des brevets

(11) **EP 4 535 147 A1**

(12) # EUROPEAN PATENT APPLICATION
published in accordance with Art. 153(4) EPC

(43) Date of publication:
**09.04.2025 Bulletin 2025/15**

(21) Application number: **23914421.5**

(22) Date of filing: **20.11.2023**

(51) International Patent Classification (IPC):
*G06F 3/04817* (2022.01)

(52) Cooperative Patent Classification (CPC):
**G06F 3/04817; G06F 3/0484**

(86) International application number:
**PCT/CN2023/132678**

(87) International publication number:
**WO 2024/146286 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2023 CN 202310021003**

(71) Applicant: **Huawei Technologies Co., Ltd.
Shenzhen, Guangdong 518129 (CN)**

(72) Inventors:
• **QIAN, Kun**
 **Shenzhen, Guangdong 518129 (CN)**

• **MAO, Xinjie**
 **Shenzhen, Guangdong 518129 (CN)**
• **SHAN, Chang**
 **Shenzhen, Guangdong 518129 (CN)**
• **XU, Shun**
 **Shenzhen, Guangdong 518129 (CN)**
• **MA, Chengbiao**
 **Shenzhen, Guangdong 518129 (CN)**

(74) Representative: **Maiwald GmbH
Engineering
Elisenhof
Elisenstrasse 3
80335 München (DE)**

(54) **APPLICATION DISPLAY METHOD AND ELECTRONIC DEVICE**

(57) An application display method and an electronic device are provided. **In** the method, the electronic device obtains original display data of a first application in response to a first operation triggered by a user, where the original display data includes one or more elements forming a first application interface of the first application and original size information of the one or more elements; performs scaling-down processing or scaling-up processing on a first element based on the original size information and screen size information of the electronic device, to obtain target size information of the first element, where the first element is at least one of the one or more elements; and displays a second application interface of the first application based on the target size information of the first element. According to the method, the electronic device may adjust a size of a display element in an application package from an application developer, so that a problem of displaying an element in an abnormal size can be resolved, an application interface can be flexibly displayed on a screen of the electronic device, and user experience can be improved.

```
┌─────────────────────────────────────────────────────┐
│ Obtain original display data of a first application  │ 2001
│ in response to a first operation triggered by a user,│
│ where the original display data includes one or more │
│ elements forming a first application interface of the│
│ first application and original size information of the│
│ one or more elements                                 │
└─────────────────────────────────────────────────────┘
                         │
┌─────────────────────────────────────────────────────┐
│ Perform scaling-down processing or scaling-up        │ 2002
│ processing on a first element based on the original  │
│ size information and screen size information of an    │
│ electronic device, to obtain target size information │
│ of the first element, where the first element is at  │
│ least one of the one or more elements                │
└─────────────────────────────────────────────────────┘
                         │
┌─────────────────────────────────────────────────────┐
│ Display a second application interface of the first  │ 2003
│ application based on the target size information of   │
│ the first element                                    │
└─────────────────────────────────────────────────────┘
```

FIG. 20

EP 4 535 147 A1

**Description**

**CROSS-REFERENCE TO RELATED APPLICATIONS**

This application claims priority to Chinese Patent Application No. 202310021003.2, filed with the China National Intellectual Property Administration on January 6, 2023 and entitled "APPLICATION DISPLAY METHOD AND ELECTRONIC DEVICE", which is incorporated herein by reference in its entirety.

**TECHNICAL FIELD**

This application relates to the field of terminal technologies, and in particular, to an application display method and an electronic device.

**BACKGROUND**

As styles of terminal products increase, sizes and forms of displays of electronic devices tend to be diversified. For example, a display of an electronic device may be folded inwards or outwards, or folded horizontally or vertically. For displays of various shapes and sizes, many applications optimize application display interfaces. For example, different application interface layouts are used for displays of different sizes in a responsive layout manner. For another example, an application is displayed on a split screen interface through a screen splitting capability provided by a system of an electronic device.

However, there are still many applications that cannot adapt to various screen aspect ratios, resulting in abnormal application display. For example, when a tablet computer displays an application interface, display content such as a picture or a text may become abnormally large, affecting user experience.

**SUMMARY**

This application provides an application display method and an electronic device, to flexibly display an application interface on a screen of the electronic device, so that user experience is improved.

According to a first aspect, this application provides an application display method, and the method may be applied to an electronic device. The method includes: obtaining original display data of a first application in response to a first operation triggered by a user, where the original display data includes one or more elements forming a first application interface of the first application and original size information of the one or more elements; performing scaling-down processing or scaling-up processing on a first element based on the original size information and screen size information of the electronic device, to obtain target size information of the first element, where the first element is at least one of the one or more elements; and displaying a second application interface of the first application based on the target size information of the first element.

According to the method, the electronic device can adjust display of an application interface. Through scaling processing, an element size of an application can be adjusted to an appropriate size on electronic devices of different screen sizes, to avoid an abnormal display problem, for example, a problem of a large picture and a large font size, caused by an unadapted screen aspect ratio. In this way, adaptation costs of an application developer can be reduced through adaptive adjustment of the electronic device, and application interfaces can be flexibly displayed on screens of various types of electronic devices, so that user experience is improved. The first application interface may be understood as, for example, an original application interface provided by the application developer. The second application interface may be understood as, for example, a target application interface obtained after the electronic device adjusts an element included in the original application interface.

In a possible design, the original display data further includes original layout information. After the performing scaling-down processing on a first element, to obtain target size information of the first element, the method further includes: determining a target stack value of a second element based on the original size information and the target size information of the first element, where the second element is an element located at an adjacent location of the first element based on the original layout information, and the target stack value is a negative value; and adjusting a display location of the second element based on the target stack value, to obtain target layout information of the second element. The displaying a second application interface of the first application based on the target size information of the first element includes: displaying the second application interface of the first application based on the target size information of the first element and the target layout information of the second element.

In this design, the electronic device may further display a larger amount of information on the screen of the electronic device by combining scaling-down processing and stacking processing, so that user experience can be further improved. In this way, through stacking processing, a blank display area caused by scaling-down processing can be fully utilized, so that more content can be displayed on the screen of the electronic device.

In a possible design, the determining a target stack value of a second element based on the original size information and the target size information of the first element includes the following manners.

Manner 1: Determine a difference between the target size information and the original size information as the target stack value of the second element. In this manner, through scaling-down of the element, stacking may be implemented by reducing a distance between two adjacent elements, so that a blank display area on the screen of the electronic device caused by scaling-down processing can be reduced, and a larger amount of information can be displayed.

Manner 2: When scaling-down processing is performed on the first element in a first horizontal direction, and scaling-down processing is performed on the second element in a second horizontal direction, determine the original size information of the first element as the target stack value of the second element, where the first horizontal direction and the second horizontal direction are opposite directions, and a sum of a target width indicated by the target size information of the first element and a target width indicated by target size information of the second element is less than or equal to a screen width in the screen size information. In this manner, scaling-down processing is performed on two adjacent elements in opposite directions of a same axis, and the elements in two rows may be stacked into one row for display through stacking processing. In this way, an amount of information displayed on the screen of the electronic device can be further increased.

In a possible design, the performing scaling-down processing or scaling-up processing on a first element includes: performing scaling-down processing or scaling-up processing on the first element based on one or a combination of an element content feature and a pre-configured size adjustment strategy.

In this design, different scaling processing is performed for different types of elements included in the application, so that display adjustment of the application interface can be more accurate and more appropriate, and the application interface can be flexibly displayed on the screen of the electronic device.

In a possible design, the performing scaling-down processing or scaling-up processing on the first element based on an element content feature includes but is not limited to the following scenarios.

Scenario A: When the first element is a content-type picture element, vertical scaling-down processing or scaling-up processing is performed on the first element, and horizontal scaling-down processing or scaling-up processing is performed on the first element.

Scenario B: When the first element is a pure-color picture element, vertical scaling-down processing or scaling-up processing is performed on the first element.

Scenario C: When the first element is a text element, vertical scaling-down processing and horizontal scaling-down processing are performed on the first element.

In this design, considering that different types of elements have different display characteristics, the electronic device performs different scaling processing on the different types of elements, so that the application interface can be flexibly displayed while a display effect of the application interface is ensured.

In a possible design, the performing scaling-down processing or scaling-up processing on the first element based on a pre-configured size adjustment strategy includes: when the first element has an identifier indicating that a width extends to a full screen width, skipping performing scaling-down processing or scaling-up processing on the first element, or performing vertical scaling-down processing or scaling-up processing on the first element.

In this design, based on elements that are included in the application and that have different display characteristics, a positive display adjustment can be implemented, and more flexible display can be implemented.

In a possible design, the first element includes a first sub-element, and the performing scaling-down processing or scaling-up processing on a first element includes but is not limited to one or a combination of the following manners.

Manner A: Perform scaling-down processing or scaling-up processing on the first sub-element included in the first element.

Manner B: Sequentially perform scaling-down processing or scaling-up processing on the first element and the first sub-element in a level-by-level recursive manner.

In this design, based on an implementation in which an application interface is constructed based on a multi-tree structure, scaling processing may be implemented in an overall scaling processing manner, or scaling processing may be implemented in a level-by-level recursive scaling processing manner.

In a possible design, the performing scaling-down processing or scaling-up processing on a first element includes: performing scaling-down processing or scaling-up processing on the first element based on a reference axis or a reference point. The reference axis includes but is not limited to a central axis or a left side edge or a right side edge of the first application interface, or a central axis or a left side edge or a right side edge of the first element. The reference point includes an upper central point or an upper left coordinate point or an upper right coordinate point or a lower left coordinate point or a lower right coordinate point of the first application interface, or a central point or an upper left coordinate point or an upper right coordinate point or a lower left coordinate point or a lower right coordinate point of the first element. In this design, a scaling direction may be set based on a service requirement or the like, so that the application interface can be more flexibly displayed on the screen of the electronic device.

In a possible design, scaling-down ratios of different first elements are different or the same, or scaling-up ratios of different first elements are different or the same. In this design, different scaling ratios are set for different elements, so that the application interface can be more flexibly displayed on the screen of the electronic device.

In a possible design, in a scenario in which scaling-down processing is performed on the first element, the method further includes: performing scaling-up processing on the second element to obtain the target size information of the second element, where the second element is at least one element other than the first element in the one or more elements. The displaying a second application interface of the first application based on the target size information of the first element includes: displaying the second application interface of the first application based on the target size information of the first element and the target size information of the second element. In this design, based on a service requirement or the like, the application interface can be more flexibly displayed on the screen of the electronic device by performing scaling-down processing or scaling-up processing on different elements.

According to a second aspect, this application provides an electronic device. The electronic device includes a plurality of function modules. The plurality of function modules interact with each other to implement the method according to the first aspect and the implementations of the first aspect. The plurality of function modules may be implemented based on software, hardware, or a combination of software and hardware, and the plurality of function modules may be randomly combined or divided based on specific implementation.

According to a third aspect, this application provides an electronic device, including at least one processor and at least one memory. The at least one memory stores computer program instructions, and when the electronic device runs, the at least one processor performs the method according to the first aspect and the implementations of the first aspect.

According to a fourth aspect, this application further provides a computer program. When the computer program is run on a computer, the computer is enabled to perform the method according to any one of the foregoing aspects and the implementations of the foregoing aspects.

According to a fifth aspect, this application further provides a computer-readable storage medium, where the computer-readable storage medium stores a computer program, and when the computer program is executed by a computer, the computer is enabled to perform the method according to any one of the foregoing aspects and the implementations of the foregoing aspects.

According to a sixth aspect, this application further provides a chip. The chip is configured to read a computer program stored in a memory, to perform the method according to any one of the foregoing aspects and the implementations of the foregoing aspects.

According to a seventh aspect, this application further provides a chip system. The chip system includes a processor, configured to support a computer apparatus in performing the method according to any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete component.

For beneficial effects of any one of the second aspect to the seventh aspect and the possible designs of the second aspect to the seventh aspect, specifically refer to beneficial effects of the possible designs of the first aspect. Details are not described herein again.

## BRIEF DESCRIPTION OF DRAWINGS

FIG. 1A and FIG. 1B are a diagram of application display;
FIG. 2 is a diagram in which an electronic device displays an application interface in the middle of a screen;
FIG. 3 is a diagram in which an electronic device displays an application interface in an app multiplier mode on a screen;
FIG. 4 is a diagram of a structure of an electronic device according to an embodiment of this application;
FIG. 5 is a block diagram of a software structure of an electronic device according to an embodiment of this application;
FIG. 6a is a diagram 1 of interfaces of an application display method according to an embodiment of this application;
FIG. 6b is a diagram 2 of interfaces of an application display method according to an embodiment of this application;
FIG. 7 is a diagram 3 of interfaces of an application display method according to an embodiment of this application;
FIG. 8a is a diagram 4 of interfaces of an application display method according to an embodiment of this application;
FIG. 8b is a diagram 5 of interfaces of an application display method according to an embodiment of this application;
FIG. 9 is a diagram 1 of an area block of an application display method according to an embodiment of this application;
FIG. 10 is a schematic flowchart of an application display method according to an embodiment of this application;
FIG. 11 is a diagram 1 of scaling-down processing of an application display method according to an embodiment of this application;

FIG. 12 is a diagram 2 of scaling-down processing of an application display method according to an embodiment of this application;

FIG. 13 is a diagram of scaling processing of an application display method according to an embodiment of this application;

FIG. 14A and FIG. 14B are a diagram 1 of stacking processing of an application display method according to an embodiment of this application;

FIG. 15 is a diagram of an element layout of an application display method according to an embodiment of this application;

FIG. 16a is a schematic flowchart in which an item decoration takes effect according to an embodiment of this application;

FIG. 16b is another schematic flowchart in which an item decoration takes effect according to an embodiment of this application;

FIG. 16c is a diagram 2 of stacking processing of an application display method according to an embodiment of this application;

FIG. 17a is a diagram 3 of stacking processing of an application display method according to an embodiment of this application;

FIG. 17b is a diagram 4 of stacking processing of an application display method according to an embodiment of this application;

FIG. 18 is a diagram 1 of layout adjustment processing of an application display method according to an embodiment of this application;

FIG. 19 is a diagram 2 of layout adjustment processing of an application display method according to an embodiment of this application; and

FIG. 20 is another schematic flowchart of an application display method according to an embodiment of this application.

## DESCRIPTION OF EMBODIMENTS

The following describes in detail embodiments of this application with reference to accompanying drawings.

As styles of terminal products increase, sizes and forms of displays of electronic devices tend to be diversified. For example, a display of an electronic device may be folded inwards or outwards, or folded horizontally or vertically. For displays of various shapes and sizes, many applications optimize application display interfaces. For example, different application interface layouts are used for displays of different sizes in a responsive layout manner. For another example, an application is displayed on a split screen interface through a screen splitting capability provided by a system of an electronic device. However, there are still many applications that cannot adapt to various screen aspect ratios, resulting in abnormal application display. For example, when a tablet computer displays an application interface, display content such as a picture or a text may become abnormally large, and horizontal or vertical content may become less. As a result, less information is displayed, and user experience is affected.

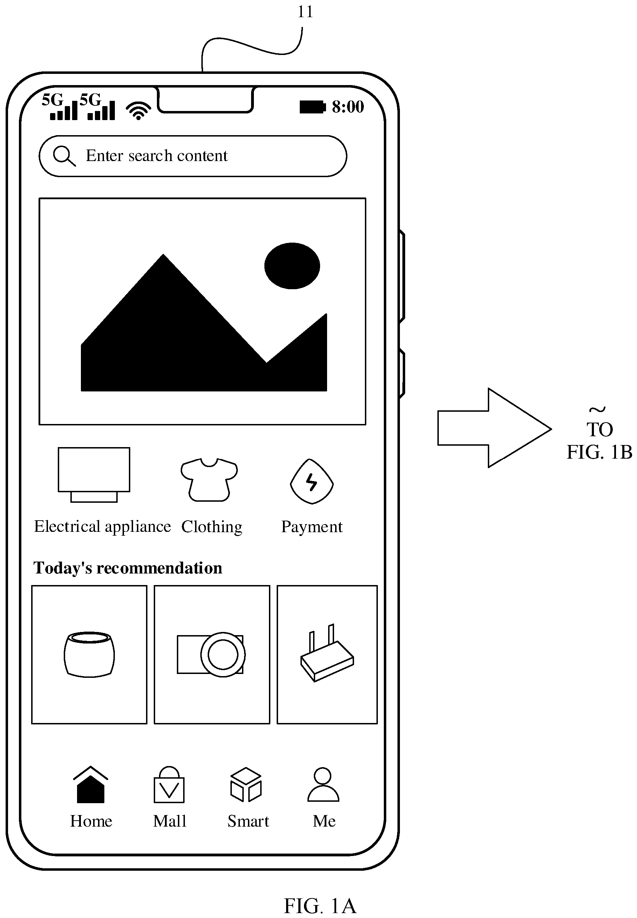

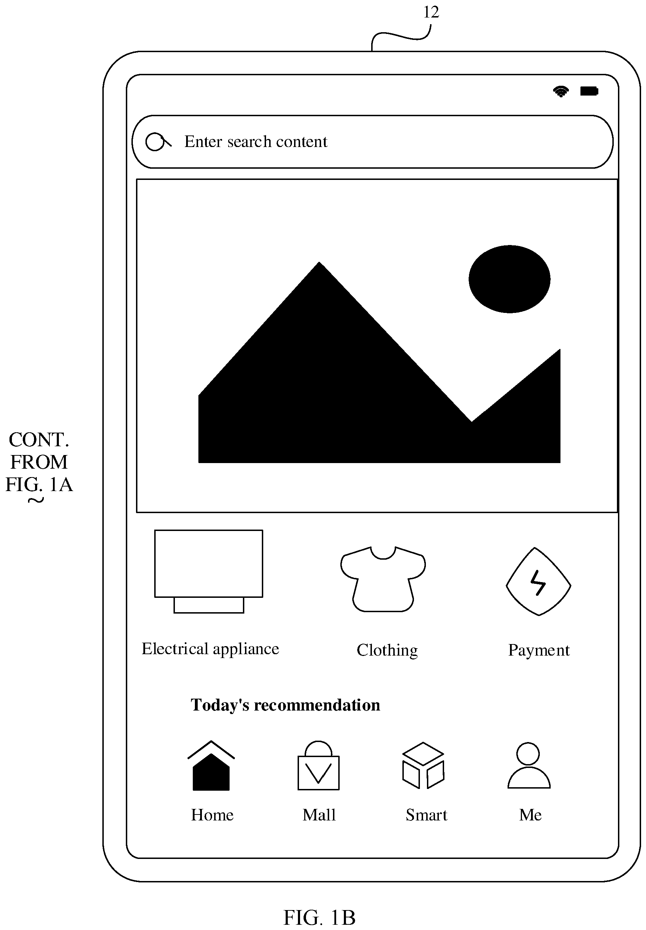

For example, FIG. 1A and FIG. 1B are a diagram of application display. With reference to FIG. 1A and FIG. 1B, for an application, an interface 11 shown in FIG. 1A may be displayed on a mobile phone, and an interface 12 shown in FIG. 1B may be displayed on a tablet computer. It can be learned from the interface 11 and the interface 12 that interfaces of the application displayed on screens of different types of electronic devices are only proportionally scaled up. Therefore, although the screen of the tablet computer is larger, because an aspect ratio of the large screen of the tablet computer is different from an aspect ratio of the long screen of the mobile phone, content such as a picture or a text on the application interface displayed on the tablet computer is abnormally scaled up, and a smaller amount of information is displayed on the screen. This affects user experience.

In an application display solution, for a problem that aspect ratios of screens of electronic devices are different, each application developer may perform targeted matching on an application of the application developer, for example, may develop an application whose version is applicable to a mobile phone and an application whose version is applicable to a tablet computer. However, this solution has high adaptation costs and application limitations.

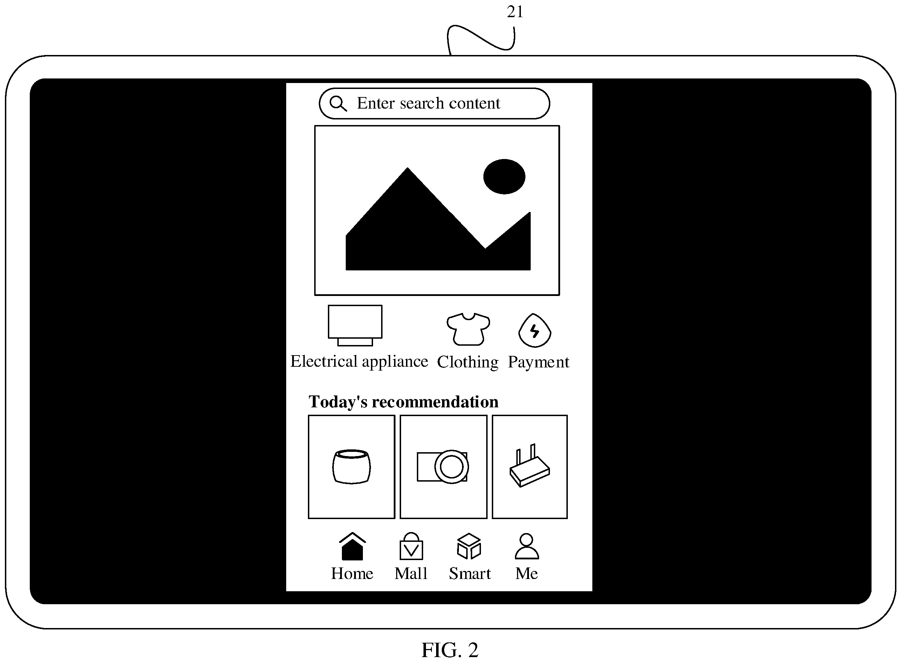

In another application display solution, when an aspect ratio of an application interface is incompatible with an aspect ratio of a screen of an electronic device, the electronic device may display the application interface in the middle of the screen, to display the application interface at an appropriate ratio. For example, FIG. 2 is a diagram in which an electronic device displays an application interface in the middle of a screen. With reference to content shown in an interface 21 in FIG. 2, the application interface is displayed in the middle of the screen of the electronic device, and an area that is not occupied by the application interface and that is on the screen is filled with a black background. However, in this manner, a size of the application interface displayed on the screen is fixed, screen utilization is low, and user experience is poor.

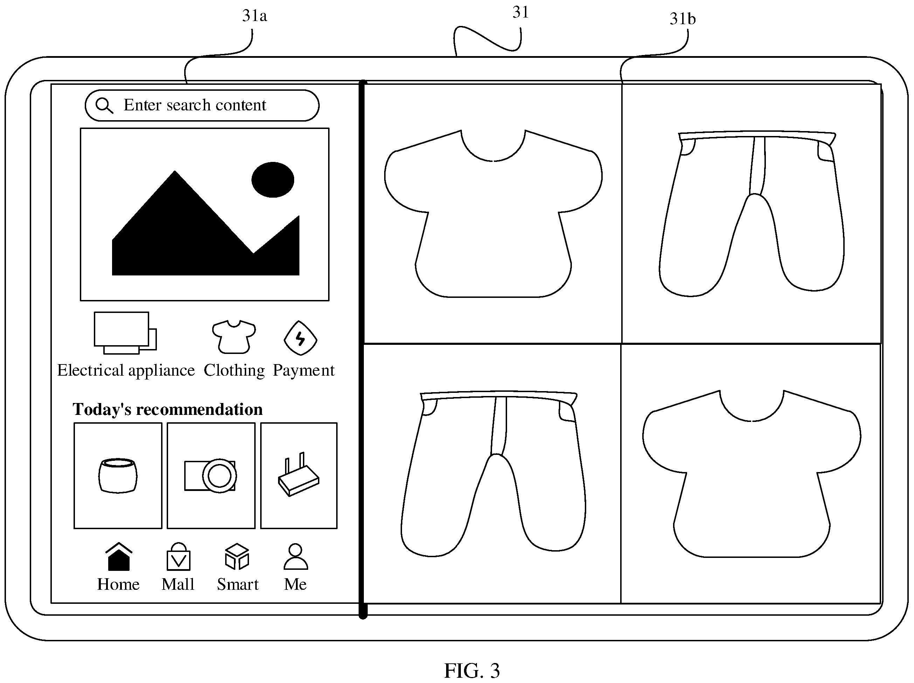

In still another application display solution, in large-screen devices such as a tablet computer or a foldable mobile phone, an application may alternatively be displayed in an app multiplier mode. For example, FIG. 3 is a diagram in which an electronic device displays an application interface in an app multiplier mode on a screen. It can be learned from an interface 31 shown in FIG. 3 that, the screen of the electronic device may be divided into two windows to display an application. For example, the interface 31 may be divided into a display window 31a and a display window 31b. In this display manner, various types of jump logic usually need to be configured, to implement linkage between two windows. For example, the electronic device detects and responds to an operation instruction for a "Clothing" control in the display window 31a, and may display an interface corresponding to a clothing category in the display window 31b. However, because the various types of jump logic in the display manner are generally configured by an application developer, and the jump logic is complex, the application developer needs to perform a large quantity of configurations. In addition, a user may not adapt to the jump logic developed by the application developer, and user experience is poor.

In view of this, this application provides an application display method, to flexibly display an application interface on a screen of an electronic device, and improve screen utilization of the electronic device. In the application display method provided in embodiments of this application, the electronic device may perform scaling processing on various types of elements included on the screen, and then display the elements. In this way, an application developer does not need to perform targeted adaptation for electronic devices having screens with different aspect ratios, and the electronic device may adjust a layout of an application of the application developer on an operating system side and then display the application, so that adaptation costs can be reduced and this method is applicable to more application scenarios.

The following describes the electronic device, and embodiments for using such an electronic device. The electronic device in embodiments of this application may be a tablet computer, a mobile phone, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, or another electronic device having a display function. A specific type of the electronic device is not limited in embodiments of this application.

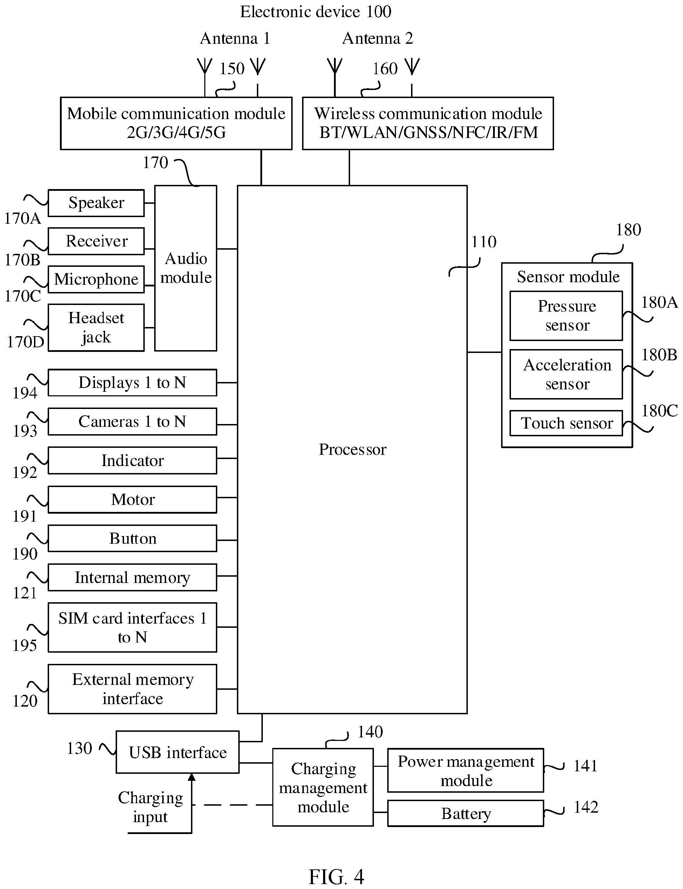

FIG. 4 is a diagram of a structure of an electronic device 100 according to an embodiment of this application. As shown in FIG. 4, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency. In embodiments of this application, the processor 110 may be configured to perform the application display method provided in embodiments of this application. For example, the processor 110 may be specifically configured to scale an element included in an application. For another example, the processor 110 may be further specifically configured to stack scaled areas. For another example, the processor 110 may be specifically further configured to adjust an element layout based on a factor like an element scaling ratio, for example, modify a layout display location.

The USB interface 130 is an interface that conforms to a USB standard specification, and may be specifically a mini USB interface, a micro USB interface, a USB Type-C interface, or the like. The USB interface 130 may be configured to be connected to a charger to charge the electronic device 100, or may be configured to transmit data between the electronic device 100 and a peripheral device. The charging management module 140 is configured to receive a charging input from a charger. The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

In embodiments of this application, the electronic device 100 may obtain, through the mobile communication module 150 or the wireless communication module 160, an application package provided by an application developer, to provide an application interface for a user after the application package is installed on the electronic device 100.

The display 194 is configured to display a display interface of an application, for example, display a display interface of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The camera 193 is configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS). In embodiments of this application, the application package obtained by the electronic device 100 may be stored in the internal memory 121, and computer program instructions used to implement the application display method provided in embodiments of this application may be further stored in the internal memory 121, so that an application is displayed after layout adjustment like scaling is performed on elements included in the application package from the application developer.

The external memory interface 120 may be configured to connect to an external memory card, such as a micro SD card, to extend a storage capability of the electronic device. The external memory card communicates with the processor 110 through the external memory interface 120, to implement a data storage function. For example, files such as pictures or videos are stored in the external memory card.

The electronic device 100 may implement an audio function, for example, music playing and recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a touch panel. The touch sensor 180C may be disposed on the display 194, and a touchscreen, also referred to as a "touchscreen", is formed by the touch sensor 180C and the display 194. The touch sensor 180C is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180C may alternatively be disposed on a surface of the electronic device 100 at a location different from that of the display 194. In embodiments of this application, the touch sensor 180C may be configured to collect a user operation of the user on the display 194. The user operation may be, for example, a sliding operation on a display interface of an application, to switch between different content of the application, or may be, for example, a tap operation on an element on a display interface of an application, to jump to an associated display interface corresponding to the element.

The button 190 includes a power button, a volume button, and the like. The button 190 may be a mechanical button, or may be a touch button. The electronic device 100 may receive a button input, and generate a button signal input related to user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 4 constitute no specific limitation on the electronic device 100. The electronic device may include more or fewer components than those shown in the figure, a combination of some components, or splits from some components, or a different component layout. In addition, a combination/connection relationship between the components in FIG. 4 may also be adjusted and modified.

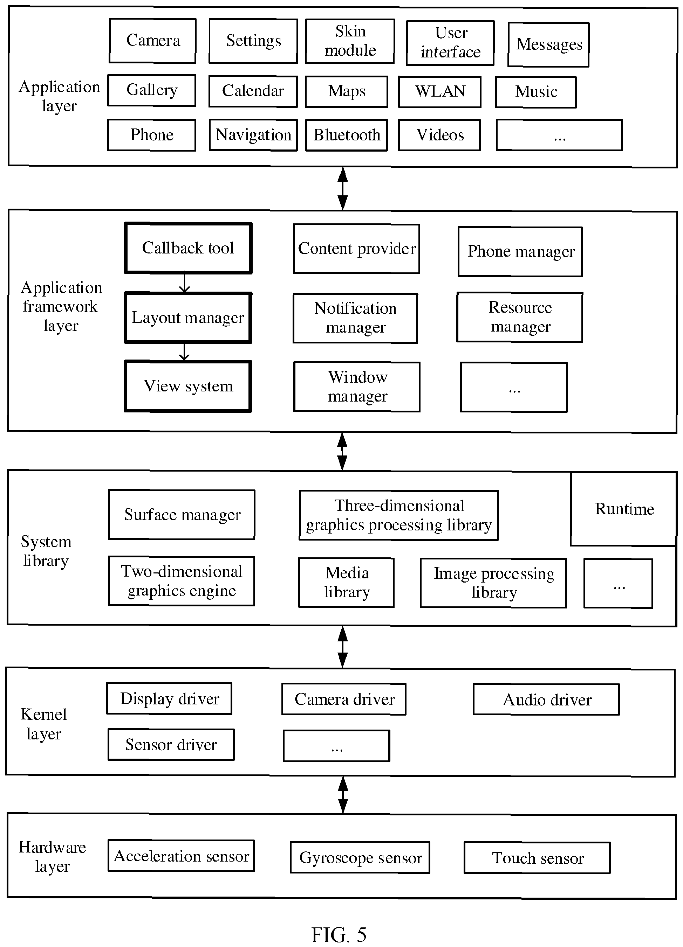

FIG. 5 is a block diagram of a software structure of an electronic device according to an embodiment of this application. As shown in FIG. 5, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 5, the application layer may include Camera, Settings, a skin module, a user interface (user interface, UI), a third-party application, and the like. The third-party application may include Gallery, Calendar, Phone, Maps, Navigation, WLAN, Bluetooth, Music, Videos, Messages, and the like. In embodiments of this application, the application layer may include a target installation package that is of a target application and that the electronic device requests to download from a server, and a function file and a layout file in the target installation package are adapted to the electronic device.

The application framework layer provides an application programming interface (application programming interface, API) and a programming framework for an application at the application layer. The application framework layer may include some predefined functions. As shown in FIG. 5, the application framework layer may include a content provider, a phone manager, a notification manager, a resource manager, and a window manager, and may further include a callback tool, a layout manager, and a view system that are focused on in embodiments of this application.

The view system includes visual controls such as a control for displaying a text and a control for displaying a picture. The view system may be configured to construct an application. A display interface may include one or more views. For example, a display interface including a messages notification icon may include a text display view and a picture display view. It may be understood that the view system may support display of various elements included in an application.

The layout manager is a plug-in toolkit added to implement the application display method in embodiments of this application, and may be configured to re-edit a layout of a visual control in the view system. The layout re-editing may include, for example, but is not limited to, scaling, stacking, and layout adjustment. Correspondingly, the layout manager may include but is not limited to a scaling tool, a stacking tool, a layout adjustment tool, and the like.

The callback tool may be configured to call back various tools in layout management in response to a display request of an application interface at the application layer, to re-edit a layout of an original visual control in a view system included in an application package. For example, the callback tool may be a hook (hook) tool. It should be noted that, in embodiments of this application, a quantity of hook tools is not limited, and a hook tool may be added to various drawing nodes as required, for example, when a view node is added, when a size of a view changes, before a size of a view is measured, or before a view is drawn. In a specific embodiment, the hook tool may invoke various tools in the layout manager, to implement functions of the various tools.

The content provider is configured to store and obtain data, and enable the data to be accessed by an application. The data may include a video, an image, audio, calls that are made and received, a browsing history, a bookmark, a phone book, and the like. In embodiments of this application, the window manager is further configured to: calculate a size of an application display area adjusted by a user, and improve a scaling capability of a window.

The phone manager is configured to provide a communication function of the electronic device, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device vibrates, or the indicator light blinks.

The window manager is configured to manage a window program. The window manager may obtain a size of the display, determine whether there is a status bar, perform screen locking, take a screenshot, and the like.

The runtime includes a core library and a virtual machine. The runtime schedules and manages an operating system.

The kernel library includes two parts: a performance function that needs to be invoked in java language, and a kernel library of the operating system. The application layer and the application framework layer run on a virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), a two-dimensional graphics engine (for example, SGL), and an image processing library.

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyroscope sensor, and a touch sensor.

It should be noted that the structures shown in FIG. 4 and FIG. 5 are merely used as examples of the electronic device provided in embodiments of this application, and cannot impose any limitation on the electronic device provided in embodiments of this application. In specific implementation, the electronic device may have more or fewer components or modules than those in the structures shown in FIG. 4 or FIG. 5.

To make the objectives, technical solutions, and advantages of embodiments of this application clearer, the following further describes embodiments of this application in detail with reference to the accompanying drawings. The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

It should be understood that, in embodiments of this application, "at least one" refers to one or more, and "a plurality of" refers to two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

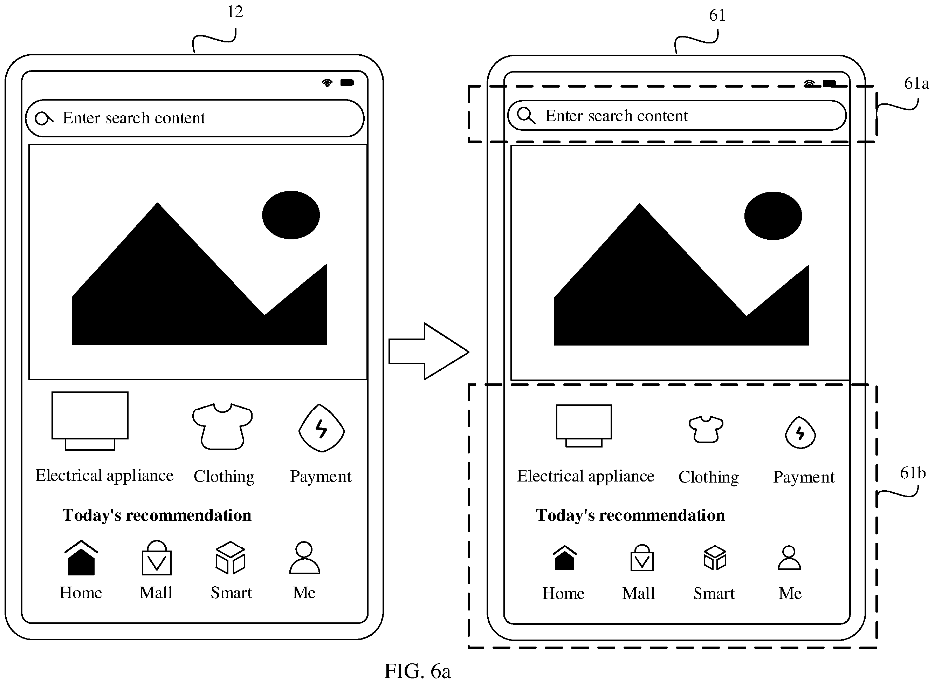

To facilitate understanding of an application display method provided in this application, the following describes, with reference to content shown in FIG. 6a to FIG. 20, an implementation process of the method provided in this application.

The method provided in embodiments of this application may be applied to an electronic device like a mobile phone or a tablet computer, and may be specifically applied to a scenario in which an interface of an application is displayed on the electronic device. According to the method provided in this application, an abnormal display problem of a picture and a text when a screen size of the electronic device does not match an application development size can be resolved. In the method, the electronic device may perform layout re-editing on various elements included in an application designed by an application developer, to improve adaptation between an application interface and a screen when the application interface is displayed, or further increase an amount of information displayed by the application on the screen of the electronic device, so that user experience is improved. Elements involved in the application may include but are not limited to: a picture-type element (for example, may include a picture control and a background picture box), a text-type element (for example, may include a text control and prompt text information), a button control, a selection-type control, and the like. The following first describes embodiments of this application based on a plurality of possible scenarios. It may be understood that implementation of this application is not limited to the application scenarios described below.

Scenario A: An electronic device may scale some elements included in an application and then display the elements, to display the elements in the application in an appropriate size, so as to avoid an abnormal size display problem. With reference to the interface 12 described in FIG. 1B, because an application developer only proportionally scales up an application interface for electronic devices of different screen sizes, various elements on the application interface are abnormally scaled up. FIG. 6a is a diagram of interfaces of an application display method according to an embodiment of this application. An interface 61 is an application interface displayed after the method provided in embodiments of this application is used. It can be learned from the interface 61 that, a new application interface display effect may be provided by proportionally scaling down sizes of a plurality of elements. For example, a search box element shown in an area 61a on the interface 61 and a prompt text element in the corresponding search box are scaled down compared with an element shown on the interface 12. For another example, an icon element shown in an area 61b on the interface 61 and a text element corresponding to the icon are also scaled down compared with an element shown on the interface 12.

It may be understood that, in comparison with the interface 12, on the interface 61, scaling-down processing may be performed on some or all elements in the application, so that sizes of various elements may be displayed in appropriate sizes, for example, similar sizes of elements in the mobile phone shown on the interface 11 in FIG. 1A. Therefore, the method may resolve a problem that an element that is displayed on electronic devices of different screen sizes is abnormally scaled up.

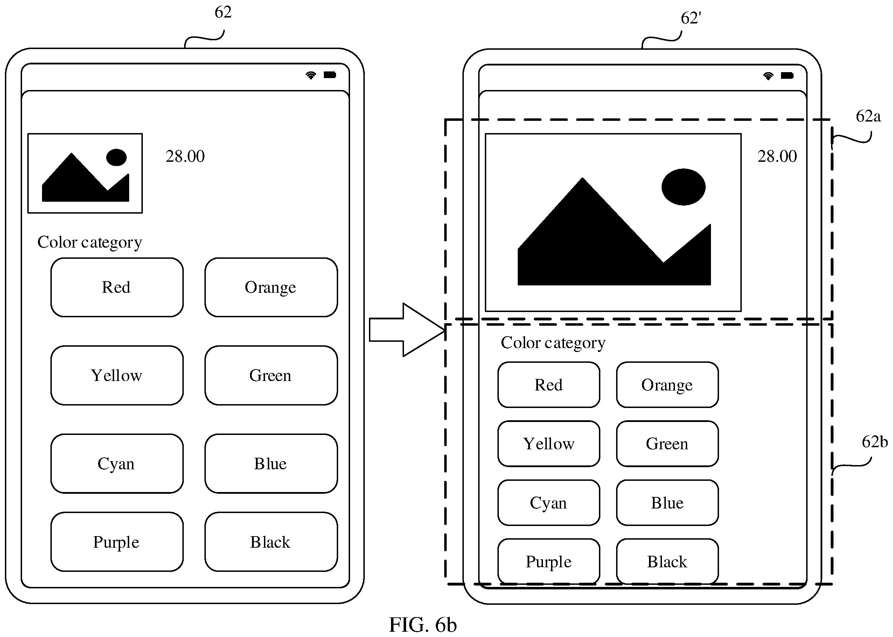

It should be noted that although a scaling-down scenario is described in FIG. 6a, the method provided in embodiments of this application is also applicable to a scenario in which some elements are scaled up, or a scenario in which some elements are scaled up and some other elements are scaled down. In addition, in an actual implementation, some elements may remain unchanged. For example, FIG. 6b is another diagram of interfaces of an application display method according to an embodiment of this application. An interface 62 in FIG. 6b is an application display interface provided by an application developer, and an interface 62' is an application display interface obtained after the electronic device adjusts, according to the method provided in this application, a size of an element included in the application. It can be learned from an area 62a on the interface 62' that, in comparison with the interface 62, a size of a picture element may be scaled up; and it can be learned from an area 62b on the interface 62' that, in comparison with the interface 62, a size of a color category element may be scaled down. In this way, based on an actual requirement, sizes of different elements included in the application may be adjusted in different ratios, so that an application interface can be better displayed on the electronic device and a more targeted size adjustment can be performed on an element.

It may be understood that, according to the method provided in this application, adaptive adaptation between the application display interface and the screen of the electronic device can be implemented on an operating system side, and adaptive ratio adjustment can be performed on an original element size from the application developer on the electronic device. In this way, electronic devices with other screen sizes can be adapted, and development costs of the application developer can be reduced.

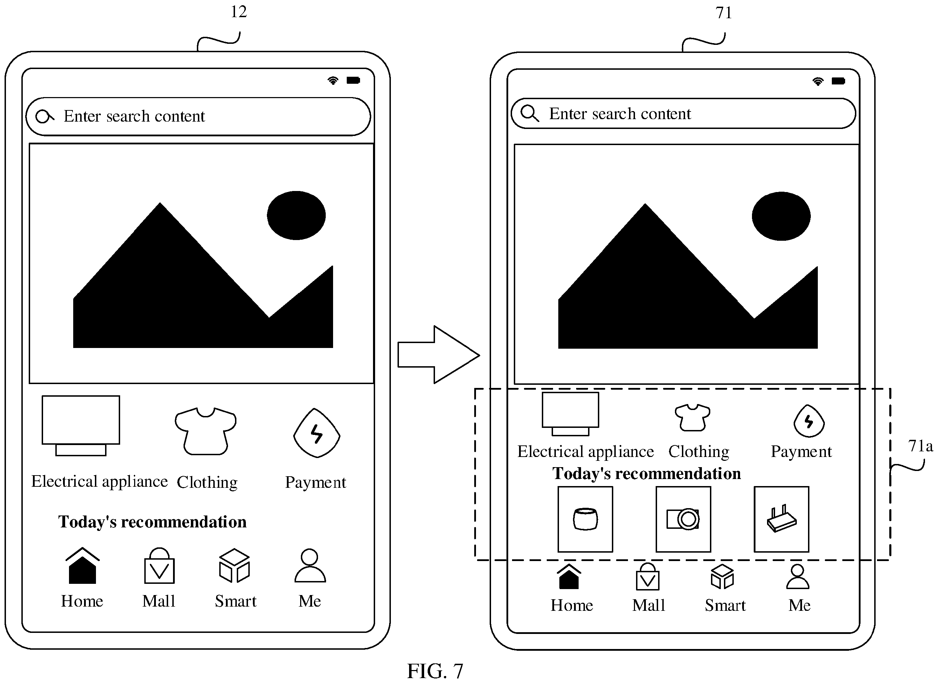

Scenario B: Based on introduction content of the scenario A, a plurality of elements shown on the interface 61 in FIG. 6a are scaled down. It may be understood that, in this case, a relative distance between elements becomes larger. In other words, larger white space is left on the application interface. To improve utilization of a display area on the screen, based on processing in the scenario A, the electronic device may further reduce the relative distance between elements, so that more elements can be displayed on the screen. FIG. 7 is another diagram of interfaces of an application display method according to an embodiment of this application. It can be learned from an interface 71 in FIG. 7 that an up-down relative distance between elements shown in an area 71a is reduced. Therefore, compared with the interface 12, the interface 71 may display a larger amount of information, for example, may display element content corresponding to "Today's recommendation". In this way, a problem of a large picture and a large font size can be resolved, and an amount of information displayed on the screen can be increased, so that user experience is improved.

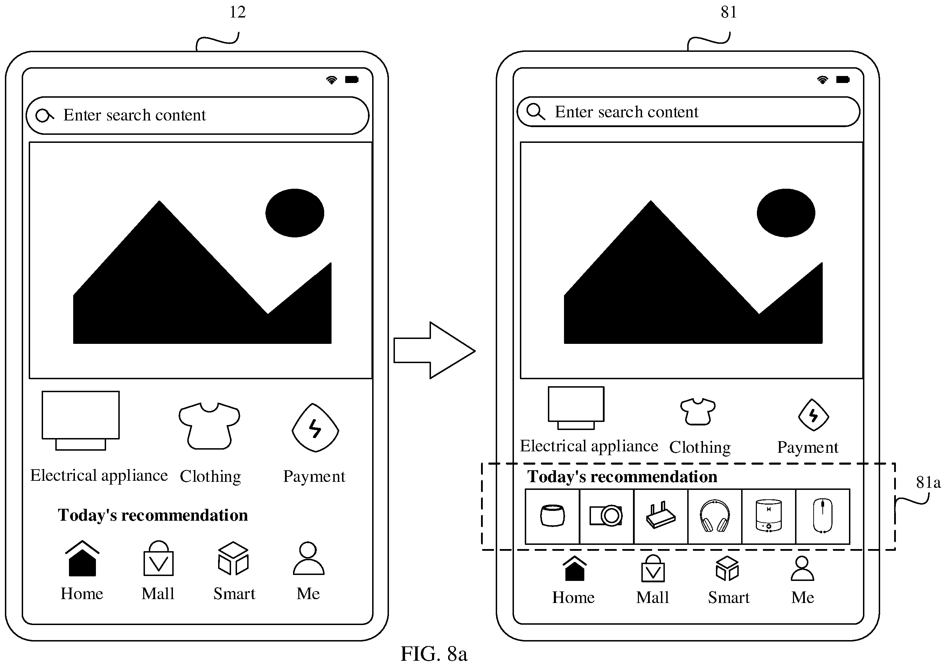

Scenario C: Based on introduction content of the scenario A or the scenario B, in some possible scenarios, in addition to reducing the relative distance between elements, an amount of information displayed on the screen may be increased by adjusting layout locations of the elements. FIG. 8a is still another diagram of interfaces of an application display method according to an embodiment of this application. It can be learned from an interface 81 in FIG. 8a that, in the "Today's recommendation" content shown in an area 81a, elements located in two rows may be combined into one row for display. Therefore, compared with the interface 12, the interface 81 may display a larger amount of information. In this way, a problem of a large picture and a large font size can be resolved, and an amount of information displayed on the screen can be increased, so that user experience is improved.

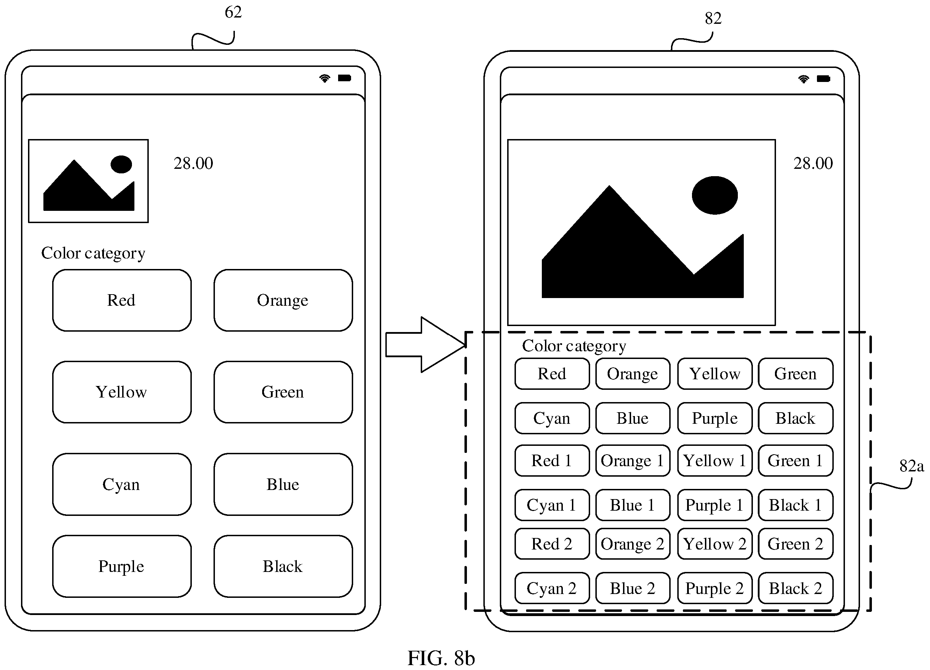

Alternatively, for example, FIG. 8b is another diagram of interfaces of an application display method according to an embodiment of this application. The interface 62 shown in FIG. 6b is used as an example. An interface 82 is an interface on which the electronic device adjusts the size and the layout of the element included in the application according to the method provided in this application. It can be learned from an area 82a on the interface 82 that, in comparison with the interface 62, color category elements are scaled down, elements belonging to two adjacent rows are combined into one row, and locations of elements after scaling-down are stacked. In this way, a display effect shown in the area 82a may be more adaptive to a screen size of an electronic device like a tablet computer, an abnormal display problem of a large picture and a large text is resolved, and a larger amount of information can be displayed on the screen, so that user experience is improved.

Based on interface display effects described in the foregoing scenario A to scenario C, the following describes an implementation process of the application display method provided in this application, to describe how to use the method provided in this application to achieve the interface processing effects shown in FIG. 6a to FIG. 8b described above, so that an application interface can be flexibly displayed on a screen of an electronic device.

For ease of understanding the method provided in embodiments of this application, technologies that may be used by an application to display an interface are first described. An application usually uses a slidable container control to construct an interface. The following are examples of some typical controls provided by the system:

A linear layout (LinearLayout) control is used to implement flow layout, to control horizontal or vertical arrangement of an element in the control.

A list view (ListView) control is used to display an element (or an object, which may include a text and a picture) in a list. Based on this control, an element may be grouped into a column with or without a column header, and an accompanying icon and text are displayed. The list view control may be used to organize a list item called a list item element (which may include a text and a picture) into one of the following four different views: 1. Large (standard) icon; 2. Small icon; 3. List; and 4. Report. In addition, the control may further manage a sorting method of elements in the list and an appearance of selected elements.

A recycler view (RecyclerView) control may display an element (or an object, which may include a text and a picture) in a list, a grid, or the like. Compared with the list view control, the recycler view control has a more powerful element reuse mechanism and provides more layout managers (LayoutMananger) to process a plurality of layouts. The layout manager may be customized to determine an item layout rule. For example, the recycler view control may provide the following layouts: 1. a linear layout, which is similar to the list view control, and can implement an element layout in a horizontal or vertical table direction; 2. a grid layout, where a quantity of elements may be specified; and 3. a waterfall layout, where a list direction or a quantity of elements in a same direction may be specified.

A scroll bar (ScrollView) may display controls in a scrolling mode.

Various elements may be arranged in a container based on various controls, so that an application interface can be displayed. On the application interface, a plurality of elements may be generally divided into different area blocks, and each area block may form an independent display space.

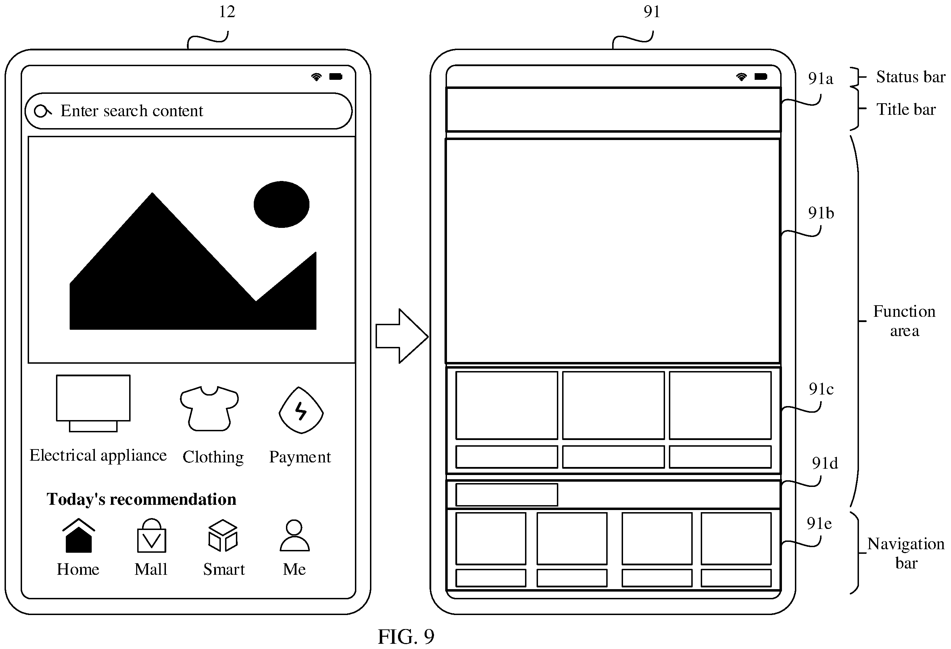

For example, FIG. 9 is a diagram of an area block of an application display method according to an embodiment of this application. Corresponding to the application interface shown on the interface 12 in FIG. 9, an interface 91 is an area block division result used to display the application interface. For example, the interface 91 may include an area block 91a, an area block 91b, an area block 91c, an area block 91d, and an area block 91e. It may be understood that, based on a feature of the recycler view, although not shown on the interface 91, the application interface may further include another area block that cannot be displayed on the screen of the electronic device. In response to a sliding operation of the user on the screen, the electronic device may switch to display content corresponding to the another area block. For example, the area block 91a may be used to display a search box element on the interface 12 and a search prompt text element in the search box; the area block 91b may be used to display a picture element on the interface 12; the area block 91c may be used to display an "Electrical appliance" picture and a text element of the picture on the interface 12; the area 91d may be used to display a "Today's recommendation" text element on the interface 12 and a picture element that is not completely displayed on the interface 12; and the area 91e may be used to display a "Home " picture, a text element of the "Home" picture on the interface 12.

In addition, when an application is displayed on the screen of the electronic device, an area that can be displayed on the screen may be generally divided into several areas, for example, a status bar, a title bar, a function area, and a navigation bar on the interface 91. The status bar is usually fixed in a topmost area of the electronic device, and is used to display a network status, a power status, time information, and the like of the electronic device. The title bar, the function area, and the navigation bar generally correspond to display areas of the application. It may be understood that, for different applications, title bars, function areas, and navigation bars that match the applications may be set.

(1) The title bar may be generally fixed on the top of the application display area, but is not limited to being located on the top, and is not limited to being displayed in a fixed manner. For example, the title bar may alternatively be displayed in a hidden manner. The title bar may generally be used to implement configuration of a type of content like searching and region selection, and may include, for example, the area block 91a on the interface 91.
(2) The function area is generally located between the title bar and the navigation bar, and may be used to implement various function configurations of the application, for example, may include at least the area blocks 91b to 91d on the interface 91, and another area block that cannot be completely displayed on the interface 91. It may be understood that the function area is generally slidable, and more content may be displayed in response to a slide operation of the user.
(3) The navigation bar may be generally fixed at the bottom of the application display area, but is not limited to being located at the bottom, and is not limited to being displayed in a fixed manner. For example, the navigation bar may alternatively be displayed in a hidden manner. The navigation bar may be usually used to implement an interface for configuring different function categories. For example, the function categories shown in FIG. 9 include four function categories: "Home", "Mall", "Smart", and "Me". For example, the navigation bar may include the area block 91e on the interface 91.

Based on the content described above, in a process of displaying the application interface, the electronic device may adjust a layout of the application display area according to the method provided in embodiments of this application. The layout adjustment may be mainly considered from several aspects, for example, a size aspect, a location aspect, and a layout aspect. With reference to the content described in the scenario A to the scenario C, the layout adjustment may include but is not limited to: scaling processing, scaling processing and stacking processing, and scaling processing, stacking processing, and layout adjustment processing. The following embodiments mainly describe implementation processes of the several aspects.

**1. Size aspect**

In an optional implementation, the electronic device may adjust, based on consideration of one or more of factors such as an element content feature and a pre-configured size adjustment strategy, a size of an element included in the application display area. For example, in any one or more of a horizontal direction or a vertical direction, at least one of the following operations may be performed on the element: scaling-down processing, scaling-up processing, or no processing. The element content feature may include, for example, but is not limited to, a picture element and a text element. The pre-configured size adjustment strategy may include, for example, but is not limited to: performing Y-axis scaling-down but not performing X-axis scaling-down on an element of a first type, performing Y-axis scaling-down and X-axis scaling-down on an element of a second type, and not performing scaling-down on an element of a third type. The Y-axis may indicate a direction parallel to a display direction of the electronic device, and the X-axis may indicate a direction perpendicular to the display direction of the electronic device.

For example, when the element content feature is a content-type picture element, in any one or more of the horizontal direction or the vertical direction, at least one of the following operations may be performed on the picture element: scaling-down processing, scaling-up processing, or no processing. For another example, when the element content feature is a pure-color picture element, in any one or more of the horizontal direction or the vertical direction, at least one of the following operations may be performed on the picture element: scaling-down processing, scaling-up processing, or no processing. Alternatively, for example, when the element content feature is a text element, in any one or more of the horizontal direction or the vertical direction, at least one of the following operations may be performed on the text element: scaling-down processing, scaling-up processing, or no processing.

For example, a pre-configured size adjustment strategy may be determined based on a development strategy of an application developer. For example, a development strategy of the search box element is usually that a width extends to a full screen width of the electronic device. In this case, the size adjustment strategy may be performing Y-axis scaling-down but not performing X-axis scaling-down, to ensure that a width of an adjusted search box element still extends to the full screen width of the electronic device. For another example, a prompt text element in the search box is usually displayed to the left in the search box. In this case, the size adjustment strategy may be performing Y-axis scaling-down and performing X-axis scaling-down. For example, for adjustment performed by the electronic device in the size aspect, refer to the content described in the scenario A in this embodiment. The application display interface after adjustment may be shown in FIG. 6a or FIG. 6b.

Optionally, when an application uses the container control to construct the interface, the electronic device may perform, in a level-by-level recursive manner, scaling processing on each area block included in the application display area. For constructing the page by using the container control, the interface of the application may generally be constructed based on a multi-tree structure. For example, the application display area may be used as a root (root) node of the multi-tree structure, and each area block may be used as a child node in the multi-tree structure. If the area block does not include a more fine-classified element, the area block may alternatively be used as a leaf node; or if the area block further includes a more fine-classified element, a minimum element included in the area block may be used as a leaf node. The level-by-level recursive manner may be understood as that level-by-level scaling processing is performed from the root node to each child node, and to the leaf node.

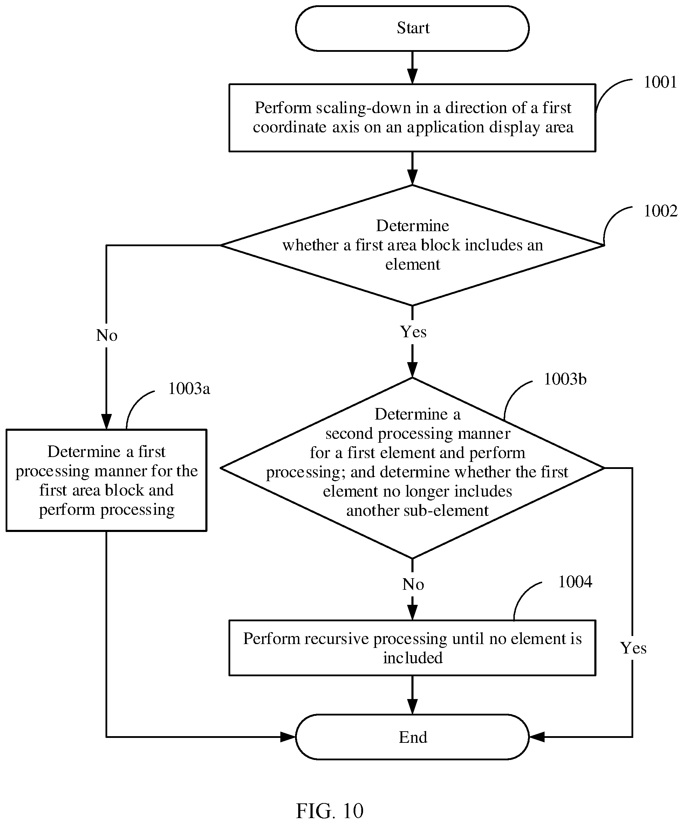

For example, a scaling-down scenario is used as an example. FIG. 10 is a schematic flowchart of an application display method according to an embodiment of this application. The method may be applied to an electronic device, and may include the following steps.

**Step 1001: Perform scaling-down in a direction of a first coordinate axis on an application display area.** For example, the first coordinate axis may be, for example, the Y axis described in the foregoing embodiment, that is, the display direction of the electronic device. It may be understood that, based on a level-by-level recursive manner, the electronic device may first perform Y-axis scaling-down processing on a root node. In this case, a processing effect of the application display area has a display effect of Y-axis flattening.

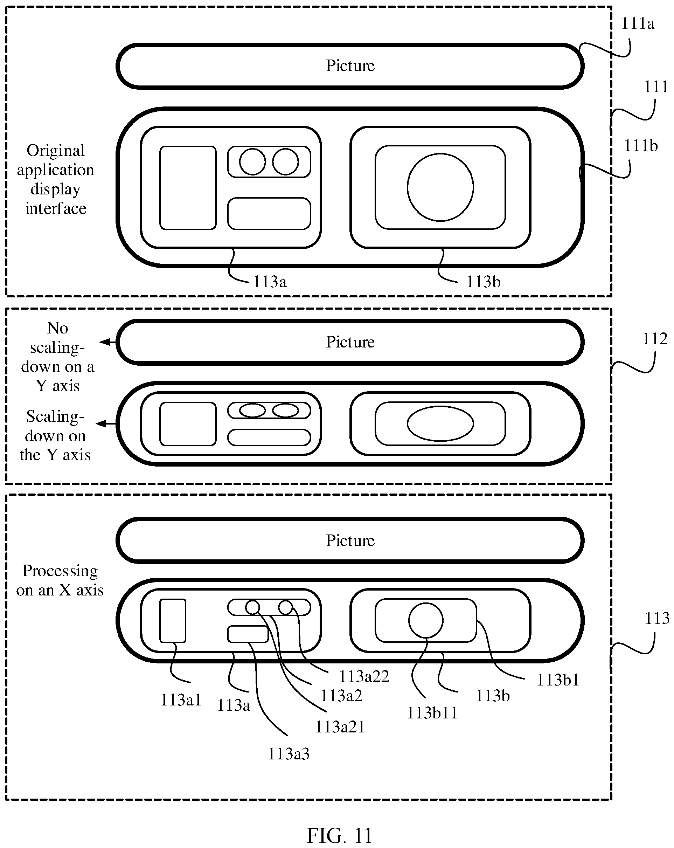

Optionally, in a process of performing Y-axis scaling-down on the application display area, the electronic device may perform Y-axis scaling-down on an area block included in the application display area. In a possible scenario, the electronic device may perform Y-axis scaling-down on each area block based on the pre-configured size adjustment strategy described above. For example, FIG. 11 is a diagram of scaling-down processing of an application display method according to an embodiment of this application. An interface 111 in FIG. 11 may be an original application display interface obtained based on an application package from an application developer, and the interface 111 may include at least an area block 111a and an area block 111b. The electronic device performs Y-axis scaling-down on the interface 111, and an interface 112 may be displayed. The area block 111a may be used to display an image element whose width extends to a full screen width of the electronic device. In this case, Y-axis scaling-down may not be performed on the area block 111a. The area block 111b may be used to display a container including a plurality of elements. In this case, Y-axis scaling-down may be performed on the area block 111b.

**Step 1002: Determine whether a first area block includes an element.** If the first area block does not include an element, step 1003a may continue to be performed; or if the first area block includes an element, step 1003b may continue to be performed. It may be understood that the electronic device may continue to process a child node after performing scaling-down processing on the root node based on step 1001 in a level-by-level recursive manner. The child node may alternatively be a leaf node. It may also be understood that, if the child node is a leaf node, recursion ends, and an element corresponding to the leaf node may be directly processed. If the child node is a non-leaf node, recursion may continue until processing on an element corresponding to the leaf node is performed.

For example, if the area block 111a in FIG. 11 is used to directly display a picture element, the area block 111a may be considered as a leaf node; and if the area 111b in FIG. 11 further includes a plurality of elements, the area block 111b may be considered as a non-leaf node.

**Step 1003a: Determine a first processing manner for the first area block and perform processing.** The first processing manner may be, for example, performing no processing on the X axis and performing scaling-down processing on the X axis. It should be noted that a first ratio used for the scaling-down processing on the Y axis in step 1001 may be the same as or different from a second ratio used for the scaling-down processing on the X axis in step 1003a. This is not limited in this application. The first ratio, the first ratio, and another ratio in subsequent embodiments of this application may be pre-configured. For example, a ratio configuration range may be any ratio value between 0 and 1. A specified ratio value is not limited in this application, and may be customized based on a service requirement, or may be calculated based on a model. For example, the first ratio may be 70%, and the second ratio may be 80%.

For example, a processing manner for the area block 111a in FIG. 11 is performing no processing on the X axis; and a processing manner for the area block 111b is also performing no processing on the X axis, but the elements included in the area block 111b need to be processed by continuing the following steps.

**Step 1003b: Determine a second processing manner for a first element and perform processing; and determine whether the first element no longer includes another sub-element.** If the first element includes another sub-element, it may be determined that the first element is a non-leaf node, and step 1004 may continue to be performed. Similar to the first processing manner, the second processing manner may be, for example, performing no processing on the X axis and performing scaling-down processing on the X axis. It should be noted that a third ratio used for the scaling-down processing on the first element on the X axis in this step may be the same as or different from the first ratio or the second ratio described in the foregoing embodiment. This is not limited in this application.

For example, the first element may be, for example, a card element, and the sub-element included in the first element may be, for example, a picture element or a text element. For example, a processing manner for the element 113a and the element 113b included in the area block 111b in FIG. 11 is performing no processing on the X axis.

In this embodiment of this application, when an element that belongs to a child node is processed in the second processing manner, a next-level child node or leaf node related to the child node may be processed at the same time. For example, if the second processing manner is performing scaling-down processing on the X axis, scaling-down processing is performed on the X axis for both the element and the sub-element included in the element; or the element may be first processed, and the sub-element included in the element is processed by continuing the following step 1004.

**Step 1004: Perform recursive processing until no element is included.** For example, for a recursive processing process, refer to the implementation process described in step 1003b. Details are not described herein again. It may be understood that, based on recursive processing, the electronic device may process an element that belongs to each level and that is included in an application, so that the application can be displayed according to the method provided in this application. For example, for next-level sub-elements 113a1, 113a2, and 113a3 included in the sub-element 113a shown in the area block 111b in FIG. 11, a next-level sub-element 113b1 included in the sub-element 113b, next-level sub-elements 113a21 and 113a22 included in the sub-element 113a2, and a next-level sub-element 113b11 included in the sub-element 113b1, scaling-down processing is performed on the X axis.

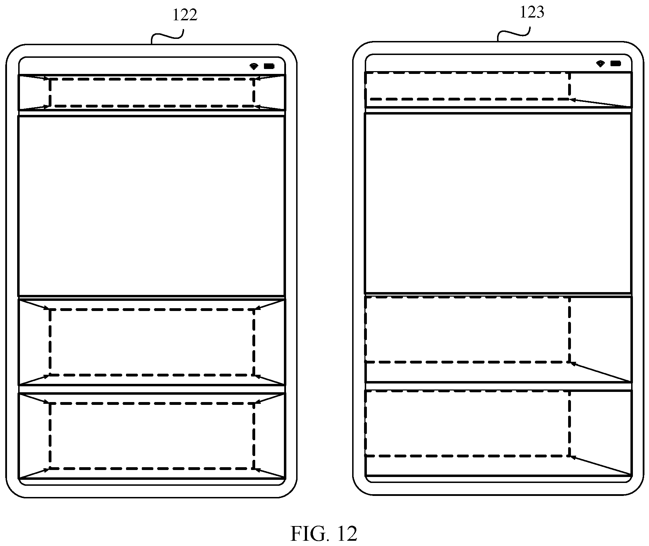

In this embodiment of this application, in a process of adjusting a size of each element by the electronic device, scaling processing may be performed by using a central axis of the application display area as a reference scaling axis, or scaling processing may be performed by using a left side edge or a right side edge of the application display area as a reference scaling axis; or the electronic device may perform scaling processing by using an upper central point, an upper left coordinate point, an upper right coordinate point, or a central point of each element of the application display area as a reference scaling point. For example, FIG. 12 is another diagram of scaling-down processing of an application display method according to an embodiment of this application. It can be learned from an interface 122 in FIG. 12 that, for each area block that requires scaling processing, scaling-down processing may be performed on a central axis of each area. It can be learned from an interface 123 in FIG. 12 that, for each area block that requires scaling processing, scaling-down processing may alternatively be performed on an upper left coordinate point of each area. The electronic device may determine a scaling direction based on a display location of the area block. For example, if the area block is displayed in the middle, the scaling direction may be a central axis or an upper center point of the application display area; or if the area block is fixed in the bottom for display like a navigation, the scaling direction may be a bottom center point direction.

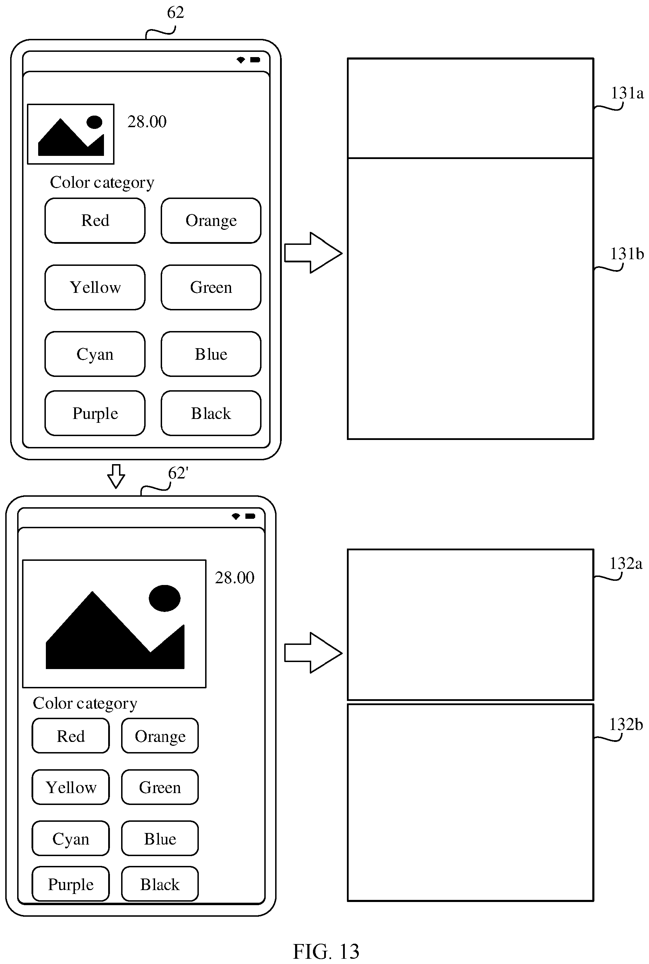

In some other embodiments, in addition to performing scaling-down processing on the area block, the area block may alternatively be scaled up. For example, FIG. 13 is a diagram of scaling processing of an application display method according to an embodiment of this application. With reference to the scenario shown in FIG. 6b, area blocks corresponding to the original application display interface 62 are an area block 131a and an area block 131b shown in FIG. 13, and area blocks corresponding to the interface 62' processed according to the method provided in this application are an area block 132a and an area block 132b shown in FIG. 13. It can be seen from FIG. 13 that, compared with the area block 131a, scaling-up processing is performed on the area block 132a. It can be understood that, corresponding scaling-up processing may also be performed on a picture element included in the area block 132a. Compared with the area block 131b, scaling-down processing is performed on the area block 132b. It can be understood that, corresponding scaling-down processing may also be performed on an element included in the area block 132b.

According to the scaling processing on the element included in the application provided in this embodiment of this application, a scaled element can be more adaptive to a screen aspect ratio of the electronic device, and can be displayed in a more appropriate size, so that user experience is improved. The scaling ratio may be determined based on screen sizes of different electronic devices, so that an application can be scaled to an appropriate size on different screens of electronic devices.

**2. Location aspect**

It may be understood that adjustment performed by the electronic device in the location aspect may be combined with the foregoing adjustment in the size aspect. Based on the element scaling-down processing performed by the electronic device, a specific blank area may exist in the area block. Therefore, stacking processing between the area blocks may be implemented, so that a larger amount of information can be displayed on the screen of the electronic device. For example, for adjustment of the location of the electronic device, refer to the content described in the scenario B in this embodiment. The application display interface after adjustment may be shown in FIG. 7.

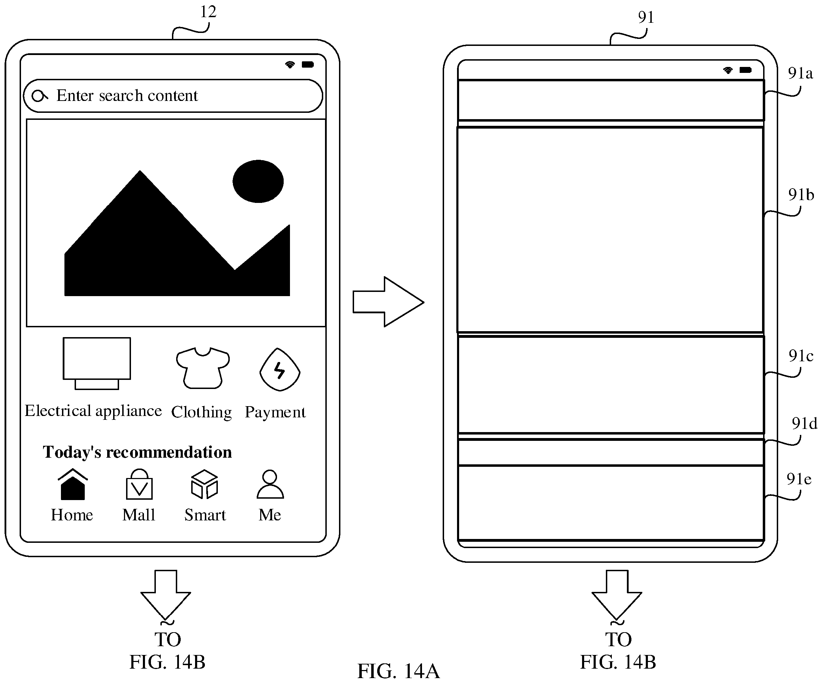

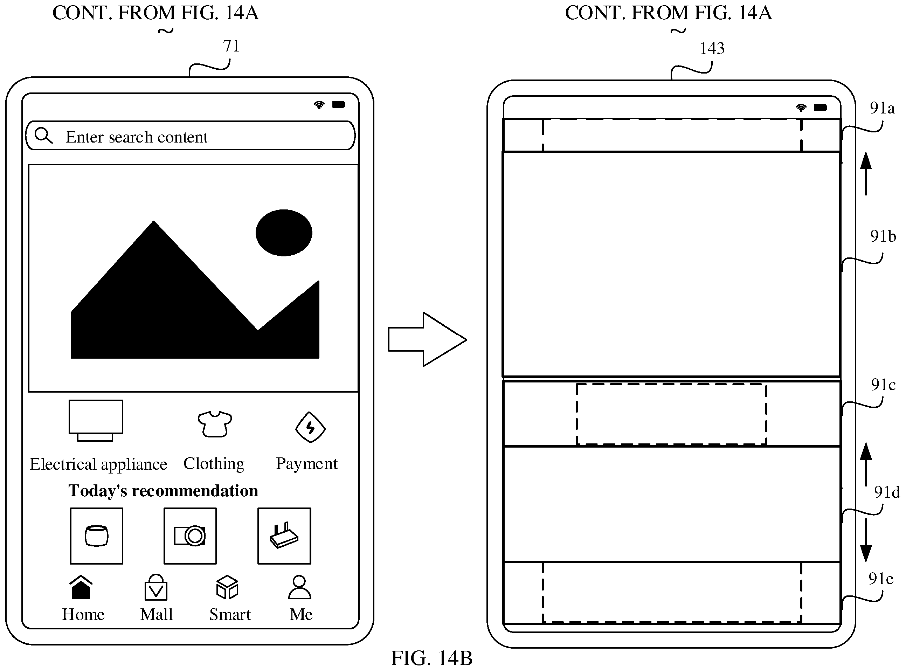

In some implementations, FIG. 14A and FIG. 14B are a diagram of stacking of an application display method according to an embodiment of this application. With reference to the content described in FIG. 7 and FIG. 9 in the foregoing embodiments, an interface 143 shown in FIG. 14B is a diagram of an area block corresponding to the interface 71. Compared with the diagram of area blocks shown on the interface 91, it can be learned that the area block 91b shown on the interface 143 is stacked upward with the area block 91a, the area block 91d is stacked upward with the area block 91c, and the area block 91d may alternatively be stacked downward with the area block 91e. In this way, through vertical stacking processing, it can be seen that, compared with the area block 91d shown on the interface 91, the area block 91d on the interface 143 has a larger display area. In other words, the interface 71 may display a larger amount of information than the interface 12. In addition, in this embodiment of this application, in the function area of the application display area, if a display direction is top-to-bottom display, the area blocks may be stacked in an upward manner. It may be understood that if the display direction is bottom-to-top display, the area blocks may alternatively be stacked in a downward manner. This is not limited in this application. In addition, for the title bar fixed in the top area, the function area may be stacked upward; and for the navigation bar fixed in the bottom area, the function area may be stacked downward. Therefore, the stacking direction in this embodiment of this application may be adaptively configured based on an original layout manner of the application.

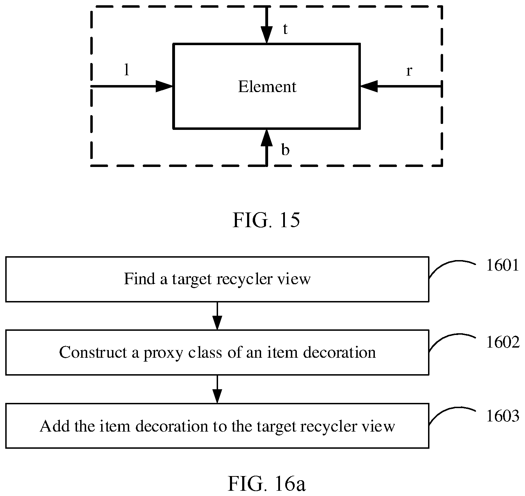

For example, when the application constructs an interface, in addition to setting an element size, a layout of an element on the application interface further needs to be defined. For example, a spacing between elements is usually controlled based on an item decoration (Item Decoration). FIG. 15 is a diagram of an element layout of an application display method according to an embodiment of this application. Generally, l may be used to represent an offset of the element relative to the left, b may be used to represent an offset of the element relative to the bottom, r may be used to represent an offset of the element relative to the right, and t may be used to represent an offset of the element relative to the top. It may be understood that a spacing between an element and another element may be controlled by setting offsets of the element in the four directions, so as to ensure a display effect.

FIG. 16a is a schematic flowchart in which an item decoration takes effect according to an embodiment of this application. When the electronic device identifies a scenario in which an element is scaled, for example, an element in a recycler view is scaled, an item decoration may be constructed by using the following procedure to adjust the spacing between elements:

Step 1601: Find a target recycler view (RecyclerView).
Step 1602: Construct a proxy class of an item decoration (Item Decoration).
Step 1603: Add the item decoration to the target recycler view. It may be understood that, by adding the item declaration to the target recycler view, the target recycler view may have a capability of adjusting the spacing between elements.

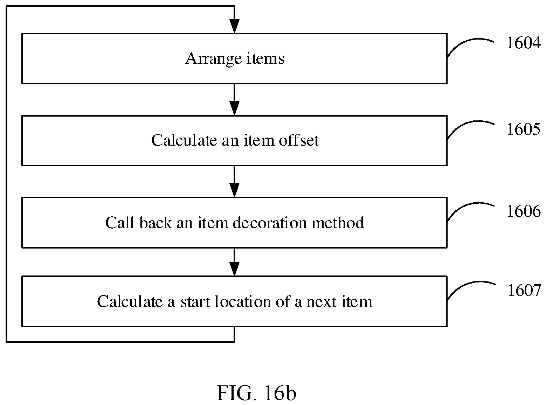

FIG. 16b is another schematic flowchart in which an item decoration takes effect according to an embodiment of this application. Based on the item declaration added to the target recycler view described in FIG. 16a, when elements are arranged in the target recycler view, a processing procedure for each element may include the following steps:

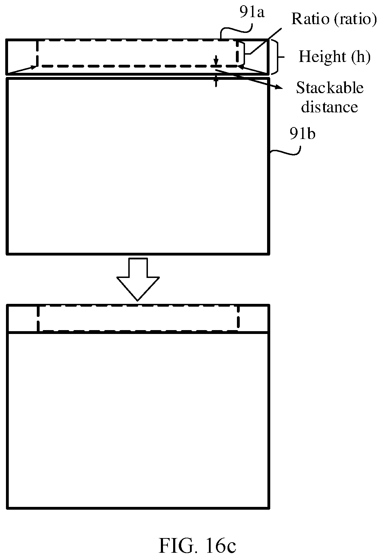

Step 1604: Arrange items (Items). An item may be any element included in the target recycler view.
Step 1605: Calculate an item offset (Item offset). For example, the item offset may be a target stack value described in FIG. 16c below. The item offset may affect a start location of a next item.
Step 1606: Call back an item decoration method.
Step 1607: Calculate a start location of a next item. For example, FIG. 16c is another diagram of stacking processing of an application display method according to an embodiment of this application. The area block 91a and the area block 91b are used as an example. A height of the area block 91a is h, and a scaling-down ratio of an element in the area block is ratio. It can be seen from FIG. 16c that, when the element in the area block is scaled down upward, a blank area of h*(1-ratio) may exist in the area block 91a, that is, a stackable area. In this way, a target stack value y of the area block 91b relative to the area block 91a may be set to a negative value, so that the area block 91b may be stacked on the blank area of the area block 91a. For example, for y, refer to the following formula 1:

$$y = -h * (1 - \text{ratio}) \quad \text{Formula 1}$$

The target stack value y may be used to determine a spacing between the area block 91b and the area block 91a in FIG. 16c. In other words, a start location of the area block 91b may be determined. By setting y to a negative value, display stacking between the area block 91b and the area block 91a may be implemented. In other words, a same display area on the screen displays partial display content of the area block 91b and partial display content of the area block 91a in a stacking manner. In addition, based on a fact that the area block 91b is located below the area block 91a, the area block 91b may be displayed on the area block 91a in a stacking manner. In this way, a blank area in the area block 91a caused by scaling-down can be utilized for display, so that an amount of information displayed on the screen of the electronic device can be increased.

It may be understood that, for another area block included in the application or an element included in the area block, the electronic device determines a target stack value of a next adjacent area block or an adjacent element in a manner shown in FIG. 16c, so that display stacking can be implemented, and a larger amount of information can be displayed on the screen of the electronic device.

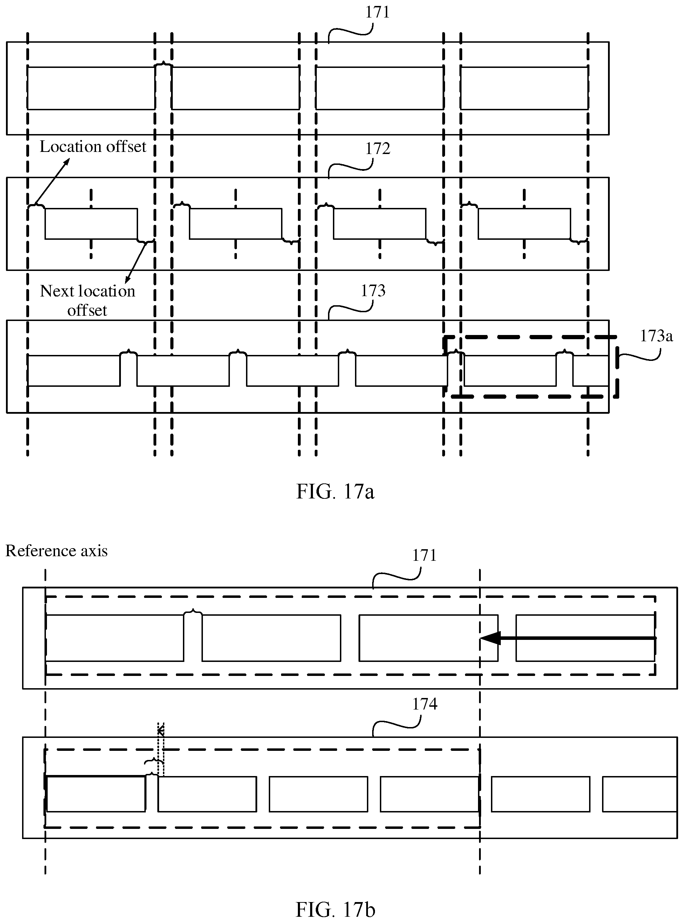

In some implementations, in addition to the vertical stacking shown in FIG. 16c, horizontal stacking may be further implemented. For example, the vertical stacking may be applied to the recycler view, and the horizontal stacking may be applied to the list view. For example, FIG. 17a is another diagram of stacking of an application display method according to an embodiment of this application. In FIG. 17a, an area block 171 may show an original application display interface, an area block 172 may show a display interface obtained after an element is scaled down, and an area block 173 may show a display interface obtained after the element is scaled down and horizontally stacked. It can be seen from the area block 171 that, the original application display interface may display four elements. It can be seen from the area block 172 that each element may be scaled down by using a center point of each element as a reference center. It can be seen from the area block 173 that, after elements in the area block 172 are scaled down, a spacing between the elements is increased, and the elements may be horizontally stacked.

In some embodiments, in the horizontal stacking manner, each element in the area block 172 is scaled down based on a center point of the element. Therefore, a location offset and a next location offset may be set for each element. The location offset may be determined based on a scaling-down ratio of the element, and the next location offset may be determined based on a scaling-down ratio of an adjacent previous element. For example, the location offset (location offset) of the element may be determined according to the following formula 2:

$$\text{location offset} = -\text{width}_n * \frac{(1 - \text{ratio})}{2} \quad \text{Formula 2}$$

The next location offset (next location offset) of the element may be determined according to the following formula 3:

$$\text{next location offset} = -\sum_{1}^{n-1}\left(\text{width}_n * \frac{(1 - \text{ratio})}{2}\right) \quad \text{Formula 3}$$

Herein, n in the formula 3 may be a location of an element. For example, n of a second element may be 2. A next location offset of the second element may be one element offset caused by scaling-down of a first element, and a next location offset of a third element may be two element offsets caused by scaling-down of the first element and the second element. $\text{width}_n$ indicates a width of an $n^{\text{th}}$ element.

In some other embodiments, in another horizontal stacking manner, each element in the area block may be further scaled down by using a left side edge of the application display area as a reference axis. For example, FIG. 17b is still another diagram of stacking of an application display method according to an embodiment of this application. As described in FIG. 17a, the area block 171 may show the original application display interface. An area block 174 may show a display interface obtained after elements are scaled down by using a left side edge of the application display area as a reference axis, and then the scaled-down elements are stacked. It may be understood that the spacing between elements is pre-configured in original layout information. In a scenario in which scaling-down is performed based on the left side edge of the application display interface, all elements included in the area block 171 may be further scaled down as a whole. It may be understood that, the spacing between elements after scaling-down may also be further reduced based on a scaling-down ratio (ratio). Compared with the area block 171 in FIG. 17b, the elements in the area block 174 are scaled down, and the spacing between the elements also reduces.

It should be noted that FIG. 17a is merely a possible horizontal stacking manner. This manner is not limited in this embodiment of this application. For example, elements may be sequentially scaled down and offset. For example, after the first element is scaled down and offset, the second element is scaled down and offset. The target offset value may be determined based on a scaling ratio of a related element, so that a display interface of a horizontally stacked area block is implemented as shown by the area block 173 in FIG. 17a. It can be learned from an area 173a shown in the area block 173 that the application interface displayed according to the method provided in this application may include more display content, so that an amount of information on the screen can be increased.

**3. Layout aspect**

It may be understood that adjustment performed by the electronic device in the layout aspect may be combined with the foregoing adjustment in the size aspect, or may be further combined with the foregoing adjustment in the size aspect and the location aspect. For example, for the adjustment performed by the electronic device in the layout aspect, refer to the content described in the scenario C in this embodiment. The application display interface after adjustment may be shown in FIG. 8a or FIG. 8b.

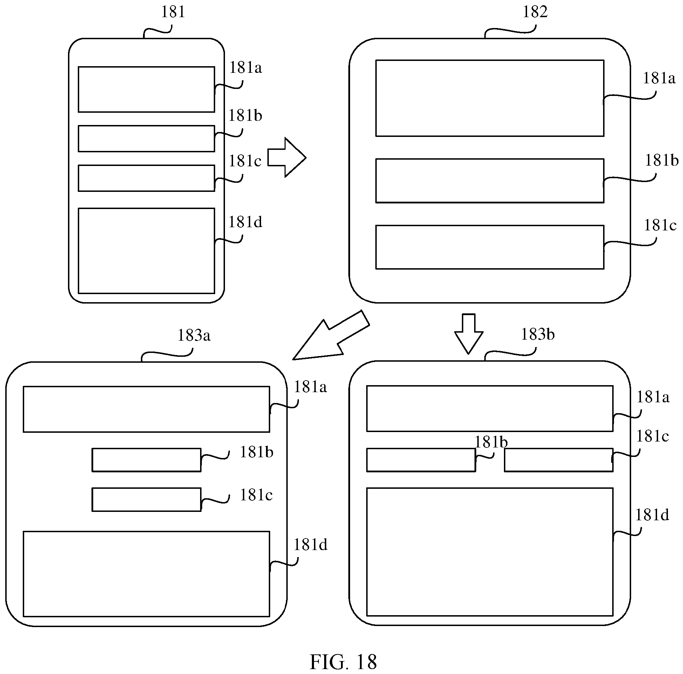

In some implementations, FIG. 18 is a diagram of layout adjustment processing of an application display method according to an embodiment of this application. In FIG. 18, an example in which the electronic device is a foldable mobile phone is used. An interface 181 may be an interface displayed by the mobile phone when the foldable mobile phone is in a folded state, and an interface 182 may be an interface displayed by the mobile phone when the foldable mobile phone is in an unfolded state. As shown in the interface 181, an application interface displayed on a mobile phone screen may include an area block 181a, an area block 181b, an area block 181c, and an area block 181d, where the area block 181a and the area block 181d each may be an area block whose width extends to a full screen width. It can be learned from the interface 182 that, although the mobile phone screen in the unfolded state is larger than the mobile phone screen in the folded state, the interface 182 displays less application content than the interface 181.

Optionally, based on the processing in the size aspect described in the first aspect, the electronic device may perform scaling-down processing on an element included in the application in a direction towards an upper center point of the element, and an interface 183a may be displayed. It can be learned from the interface 183a that an application interface displayed after the scaling-down processing may display more content and have a better visual effect. Because the widths of the area block 181a and the area block 181d may extend to the full screen width, scaling-down processing may be performed only in a Y-axis direction. Because widths of the area block 181b and the area block 181c do not need to extend to the full screen width, scaling-down processing may be performed in the Y-axis direction and in an X-axis direction.

In some implementations, based on the processing in the size aspect described in the first aspect and the processing in the location aspect described in the second aspect, the electronic device may not only implement element scaling-down processing, but also may implement layout adjustment in combination with stacking processing. For example, an interface 183b may be displayed. It can be seen from the interface 183b that, the area block 181b and the area block 181c after the scaling-down processing may be adjusted from a layout occupying two rows to a layout occupying one row, where a sum of widths of the area block 181b after scaling-down and the area block 181c after scaling-down is less than or equal to a screen width of the electronic device. When the area block 181b and the area block 181c after the scaling-down processing are adjusted from the layout occupying two rows to the layout occupying one row, the area block 181d below the area block 181b and the area block 181c may be scaled up, and the area block 181b, the area block 181c, and the area block 181d may be stacked. In this way, compared with the interface 183a, the interface 183b may display more content. It should be noted that, for scaling-up processing and stacking processing, refer to specific descriptions in "1. Size aspect" and "2. Location aspect", and details are not described herein again.

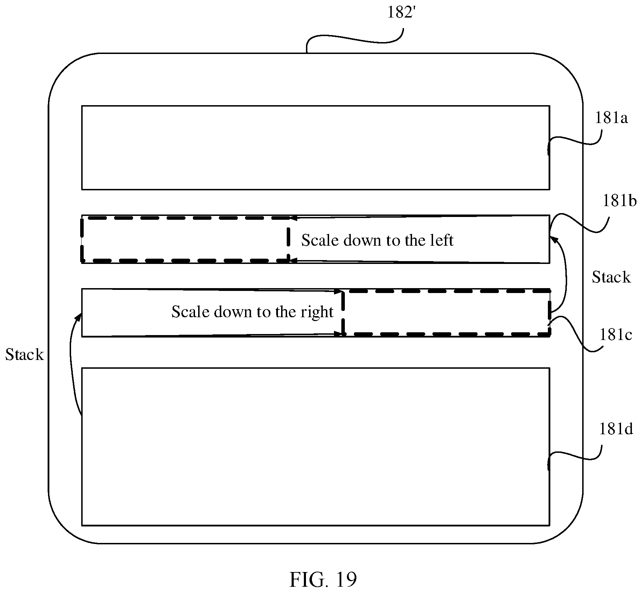

For example, FIG. 19 is a diagram of layout adjustment of an application display method according to an embodiment of this application. For example, based on the interface 182 shown in FIG. 18, on an interface 182' shown in FIG. 19, for an area block 183b, an electronic device may perform scaling-down processing in a left direction of the area block, and for an area block 183c, the electronic device may perform scaling-down processing in a right direction of the area block. It may be understood that, when a sum of widths of two rows of area blocks after scaling-down is less than or equal to a screen width of the electronic device, stacking processing may be performed on one of the area blocks. For example, stacking processing may be performed on the area block 181c shown on the interface 182', and a target stacking value may be a sum of an area block height of the area block 181b and a spacing between the area block 181b and the area block 181c. In addition, an area block 181d below the area block 181b and the area block 181c may also be stacked, and a target stack value may be a sum of an area block height of the area block 181c and a spacing between the area block 181c and the area block 181d. Therefore, based on the scaling-down processing and the stacking processing shown on the interface 182' in FIG. 19, the electronic device may display the application interface shown on the interface 183b in FIG. 18. In this way, based on the application interface obtained according to the method provided in this embodiment of this application, not only an element included in an application can be adjusted to an appropriate size for display, but also a layout can be adjusted by stacking, so that a larger amount of information can be displayed.

According to the method provided in this embodiment of this application, the electronic device can adjust display of an application interface. Through scaling processing, an element size of an application can be adjusted to an appropriate size on electronic devices of different screen sizes, to avoid an abnormal display problem, for example, a problem of a large picture and a large font size, caused by an unadapted screen aspect ratio. In addition, the electronic device may further display a larger amount of information on the screen of the electronic device by combining scaling processing and stacking processing, so that user experience can be improved. The method provided in this embodiment of this application is applied to a system side of an electronic device, so that adaptation costs of an application developer can be reduced, and therefore the method can be applied to more types of electronic devices.

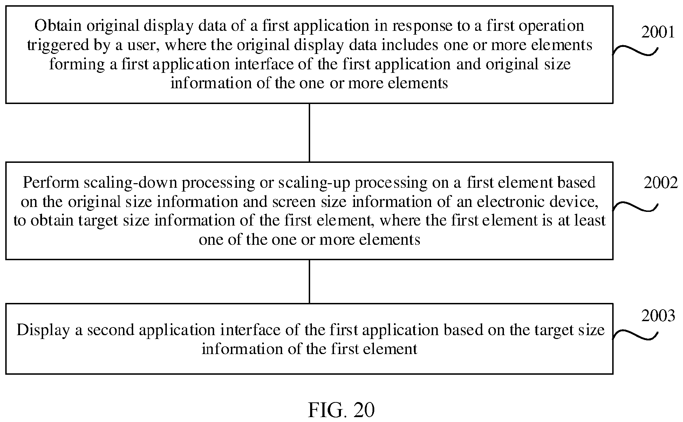

FIG. 20 is a schematic flowchart of an application display method according to an embodiment of this application. The method may be applied to an electronic device, and a procedure of the method may include at least the following steps.

Step 2001: Obtain original display data of a first application in response to a first operation triggered by a user, where the original display data includes one or more elements forming a first application interface of the first application and original size information of the one or more elements. The first application interface may be understood as, for example, an original application interface provided by an application developer.

Step 2002: Perform scaling-down processing or scaling-up processing on a first element based on the original size information and screen size information of the electronic device, to obtain target size information of the first element, where the first element is at least one of the one or more elements.

Step 2003: Display a second application interface of the first application based on the target size information of the first element. The second application interface may be understood as, for example, a target application interface obtained after the electronic device adjusts an element included in the original application interface.

For a specific implementation process of the method described in step 2001 to step 2003, refer to the content described in the foregoing embodiments. Details are not described herein again.

Based on the foregoing embodiments, this application further provides an electronic device. The electronic device includes a plurality of function modules. The plurality of function modules interact with each other to implement the methods described in embodiments of this application. The plurality of function modules may be implemented based on software, hardware, or a combination of software and hardware, and the plurality of function modules may be randomly combined or divided based on specific implementation. For example, the electronic device may be configured to perform step 1001 to step 1004 shown in FIG. 10, or perform step 1601 to step 1603 shown in FIG. 16a, or perform step 1604 to step 1607 shown in FIG. 16b, or perform step 2001 to step 2003 shown in FIG. 20. For a specific implementation process, refer to the content described in the foregoing embodiments. Details are not described herein again.

Based on the foregoing embodiments, this application further provides an electronic device. The electronic device includes at least one processor and at least one memory. The at least one memory stores computer program instructions. When the electronic device runs, the at least one processor performs the methods described in embodiments of this application. For example, the electronic device may be configured to perform step 1001 to step 1004 shown in FIG. 10, or perform step 1601 to step 1603 shown in FIG. 16a, or perform step 1604 to step 1607 shown in FIG. 16b, or perform step 2001 to step 2003 shown in FIG. 20. For a specific implementation process, refer to the content described in the foregoing embodiments. Details are not described herein again.

Based on the foregoing embodiments, this application further provides a computer program. When the computer program is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that, a person skilled in the art can make various modifications and variations to this application without departing from the protection scope of this application. This application is intended to cover these modifications and variations of this application provided that they fall within the scope of protection defined by the claims of this application and their equivalent technologies.

**Claims**

1.  An application display method, applied to an electronic device, wherein the method comprises:

    obtaining original display data of a first application in response to a first operation triggered by a user, wherein the original display data comprises one or more elements forming a first application interface of the first application and original size information of the one or more elements;
    performing scaling-down processing or scaling-up processing on a first element based on the original size information and screen size information of the electronic device, to obtain target size information of the first element, wherein the first element is at least one of the one or more elements; and
    displaying a second application interface of the first application based on the target size information of the first element.

2.  The method according to claim 1, wherein the original display data further comprises original layout information; and after the performing scaling-down processing on a first element, to obtain target size information of the first element, the method further comprises:

    determining a target stack value of a second element based on the original size information and the target size information of the first element, wherein the second element is an element located at an adjacent location of the first element based on the original layout information, and the target stack value is a negative value; and
    adjusting a display location of the second element based on the target stack value, to obtain target layout information of the second element; and
    the displaying a second application interface of the first application based on the target size information of the first element comprises:
    displaying the second application interface of the first application based on the target size information of the first element and the target layout information of the second element.

3.  The method according to claim 2, wherein the determining a target stack value of a second element based on the original size information and the target size information of the first element comprises:

    determining a difference between the target size information and the original size information as the target stack value of the second element; or
    when scaling-down processing is performed on the first element in a first horizontal direction, and scaling-down processing is performed on the second element in a second horizontal direction, determining the original size information of the first element as the target stack value of the second element, wherein the first horizontal direction and the second horizontal direction are opposite directions, and a sum of a target width indicated by the target size information of the first element and a target width indicated by target size information of the second element is less than or equal to a screen width in the screen size information.

**4.** The method according to any one of claims 1 to 3, wherein the performing scaling-down processing or scaling-up processing on a first element comprises:
performing scaling-down processing or scaling-up processing on the first element based on one or a combination of an element content feature and a pre-configured size adjustment strategy.

**5.** The method according to claim 4, wherein the performing scaling-down processing or scaling-up processing on the first element based on an element content feature comprises:

when the first element is a content-type picture element, performing vertical scaling-down processing or scaling-up processing on the first element, and performing horizontal scaling-down processing or scaling-up processing on the first element;
when the first element is a pure-color picture element, performing vertical scaling-down processing or scaling-up processing on the first element; or
when the first element is a text element, performing vertical scaling-down processing and horizontal scaling-down processing on the first element.

**6.** The method according to claim 4 or 5, wherein the performing scaling-down processing or scaling-up processing on the first element based on a pre-configured size adjustment strategy comprises:
when the first element has an identifier indicating that a width extends to a full screen width, skipping performing scaling-down processing or scaling-up processing on the first element, or performing vertical scaling-down processing or scaling-up processing on the first element.

**7.** The method according to any one of claims 1 to 6, wherein the first element comprises a first sub-element, and the performing scaling-down processing or scaling-up processing on a first element comprises:

performing scaling-down processing or scaling-up processing on the first sub-element comprised in the first element; or
sequentially performing scaling-down processing or scaling-up processing on the first element and the first sub-element in a level-by-level recursive manner.

**8.** The method according to any one of claims 1 to 7, wherein the performing scaling-down processing or scaling-up processing on a first element comprises:
performing scaling-down processing or scaling-up processing on the first element based on a reference axis or a reference point, wherein the reference axis comprises a central axis or a left side edge or a right side edge of the first application interface, or a central axis or a left side edge or a right side edge of the first element; and the reference point comprises an upper central point or an upper left coordinate point or an upper right coordinate point or a lower left coordinate point or a lower right coordinate point of the first application interface, or a central point or an upper left coordinate point or an upper right coordinate point or a lower left coordinate point or a lower right coordinate point of the first element.

**9.** The method according to any one of claims 1 to 8, wherein scaling-down ratios of different first elements are different or the same, or scaling-up ratios of different first elements are different or the same.

**10.** The method according to any one of claims 1 to 9, wherein in a scenario in which scaling-down processing is performed on the first element, the method further comprises:

performing scaling-up processing on the second element to obtain the target size information of the second element, wherein the second element is at least one element other than the first element in the one or more elements; and
the displaying a second application interface of the first application based on the target size information of the first element comprises:
displaying the second application interface of the first application based on the target size information of the first element and the target size information of the second element.

**11.** The method according to any one of claims 1 to 10, wherein the original display data is obtained from an application package of the first application.

**12.** An electronic device, comprising a plurality of function modules, wherein the plurality of function modules interact with each other to implement the method according to any one of claims 1 to 11.

13. A computer-readable storage medium, wherein the computer-readable storage medium stores instructions, and when the instructions are run on a computer, the computer is enabled to perform the method according to any one of claims 1 to 11.

14. A computer program product comprising instructions, wherein when the computer program product runs on a computer, the computer is enabled to perform the method according to any one of claims 1 to 11.

11

TO
FIG. 1B

FIG. 1A

12

CONT.
FROM
FIG. 1A
~

Enter search content

Electrical appliance          Clothing          Payment

**Today's recommendation**

Home          Mall          Smart          Me

FIG. 1B

FIG. 2

FIG. 3

Electronic device 100

FIG. 4

| Application layer | Camera | Settings | Skin module | User interface | Messages |
| | Gallery | Calendar | Maps | WLAN | Music |
| | Phone | Navigation | Bluetooth | Videos | ... |

| Application framework layer | Callback tool | Content provider | Phone manager |
| | Layout manager | Notification manager | Resource manager |
| | View system | Window manager | ... |

| System library | Surface manager | Three-dimensional graphics processing library | Runtime |
| | Two-dimensional graphics engine | Media library | Image processing library | ... |

| Kernel layer | Display driver | Camera driver | Audio driver |
| | Sensor driver | ... | |

| Hardware layer | Acceleration sensor | Gyroscope sensor | Touch sensor |

FIG. 5

FIG. 6a

FIG. 6b

FIG. 7

EP 4 535 147 A1

FIG. 8a

EP 4 535 147 A1

FIG. 8b

FIG. 9

Status bar

Title bar

Function area

Navigation bar

91a
91b
91c
91d
91e

12
91

Enter search content

Electrical appliance    Clothing    Payment

Today's recommendation

Home    Mall    Smart    Me

EP 4 535 147 A1

33

Start

Perform scaling-down in a direction of a first
coordinate axis on an application display area — 1001

Determine
whether a first area block includes an
element — 1002

No

Yes

Determine a first
processing manner for the
first area block and
perform processing — 1003a

Determine a
second processing manner
for a first element and perform
processing; and determine whether the first
element no longer includes
another sub-element — 1003b

No

Yes

Perform recursive processing until no element is
included — 1004

End

FIG. 10

111a

111

111b

Picture

Original
application
display
interface

113a

113b

No
scaling-
down on a
Y axis

112

Picture

Scaling-
down on
the Y axis

Picture

Processing
on an X axis

113

113a1

113a

113a22

113a2

113a21

113a3

113b11

113b1

113b

FIG. 11

122

123

FIG. 12

62

28.00

Color category

Red

Orange

Yellow

Green

Cyan

Blue

Purple

Black

131a

131b

62'

28.00

Color category

Red

Orange

Yellow

Green

Cyan

Blue

Purple

Black

132a

132b

FIG. 13

EP 4 535 147 A1

Enter search content

Electrical appliance  Clothing  Payment

**Today's recommendation**

Home  Mall  Smart  Me

12

91

91a

91b

91c

91d

91e

TO
FIG. 14B

TO
FIG. 14B

FIG. 14A

CONT. FROM FIG. 14A

FIG. 14B

t

l → Element ← r

b

FIG. 15

| Find a target recycler view | 1601 |

↓

| Construct a proxy class of an item decoration | 1602 |

↓

| Add the item decoration to the target recycler view | 1603 |

FIG. 16a

| Arrange items | 1604 |
| Calculate an item offset | 1605 |
| Call back an item decoration method | 1606 |
| Calculate a start location of a next item | 1607 |

FIG. 16b

91a

Ratio (ratio)

Height (h)

Stackable distance

91b

FIG. 16c

171

Location offset

172

Next location
offset

173

173a

FIG. 17a

Reference axis

171

174

FIG. 17b

FIG. 18

182'

181a

181b

Scale down to the left

Stack

Scale down to the right

181c

Stack

181d

FIG. 19

Obtain original display data of a first application in response to a first operation triggered by a user, where the original display data includes one or more elements forming a first application interface of the first application and original size information of the one or more elements ~ 2001

Perform scaling-down processing or scaling-up processing on a first element based on the original size information and screen size information of an electronic device, to obtain target size information of the first element, where the first element is at least one of the one or more elements ~ 2002

Display a second application interface of the first application based on the target size information of the first element ~ 2003

FIG. 20

## INTERNATIONAL SEARCH REPORT

| International application No. |
|---|
| **PCT/CN2023/132678** |

**A. CLASSIFICATION OF SUBJECT MATTER**

G06F 3/04817(2022.01)i

According to International Patent Classification (IPC) or to both national classification and IPC

**B. FIELDS SEARCHED**

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 界面, 页面, 屏, 适配, 适应, 兼容, 布局, 尺寸, 大小, 放大, 调整, 缩小, 元素, 对象, 窗口, 控件, 按键, 图标, 卡片, 不同, 比, interface, page, screen, adapt, compatible, layout, size, zoom in, scale up, zoom out, scale down, adjust, element, object, window, widget, button, icon, card, different, ratio

**C. DOCUMENTS CONSIDERED TO BE RELEVANT**

| Category* | Citation of document, with indication, where appropriate, of the relevant passages | Relevant to claim No. |
|---|---|---|
| Y | CN 113268303 A (BEIJING DAMI TECHNOLOGY CO., LTD.) 17 August 2021 (2021-08-17) <br> description, paragraphs 0039-0054, and figures 1-9 | 1-14 |
| Y | CN 114661258 A (HUAWEI TECHNOLOGIES CO., LTD.) 24 June 2022 (2022-06-24) <br> description, paragraphs 0087-0112, and figures 1-9 | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 January 2024** | **18 February 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT Information on patent family members | | International application No. PCT/CN2023/132678 |
|---|---|---|

| Patent document cited in search report | | | Publication date (day/month/year) | Patent family member(s) | | | Publication date (day/month/year) |
|---|---|---|---|---|---|---|---|
| CN | 113268303 | A | 17 August 2021 | None | | | |
| CN | 114661258 | A | 24 June 2022 | WO | 2022135144 | A1 | 30 June 2022 |

Form PCT/ISA/210 (patent family annex) (July 2022)

**EP 4 535 147 A1**

**REFERENCES CITED IN THE DESCRIPTION**

**Patent documents cited in the description**

- CN 202310021003